# EUROPEAN PATENT APPLICATION

(11) **EP 4 811 149 A1**
(43) Date of publication of application: **23.09.2026**
(21) Application number: 25183652.4
(22) Date of filing: 18.06.2025
(51) Int. Cl.: G06F 15/173, G06F 13/40

(54) **METHOD FOR DATA PROCESSING, APPARATUS, ELECTRONIC DEVICE, STORAGE MEDIUM,AND COMPUTER PROGRAM PRODUCT**

(30) Priority: 17.03.2025 CN 202510316015
(71) Applicant: Beijing Baidu Netcom Science Technology Co., Ltd., Beijing 100085 (CN)
(72) Inventor: CAO, Ying, Beijing, 100085 (CN); LI, Zhaogeng, Beijing, 100085 (CN); GONG, Xiaozhang, Beijing, 100085 (CN)
(74) Representative: Michalski Hüttermann & Partner mbB

(57) **Abstract**

The present disclosure provides a method for data processing, apparatus, electronic device, storage medium and computer program product, which relates to the field of artificial intelligence technology, specifically to the fields of intelligent cloud, network communication, large language models and other technologies. A method for data processing is applied to a bottom-layer switch in a multi-layer switch, wherein the multi-layer switch is configured to complete a target operation, the target operation includes a plurality of stage operations. The method includes: receiving a plurality of in-network computing requests sent by a top-layer switch in the multi-layer switch; wherein the plurality of in-network computing requests correspond to the plurality of stage operations one-to-one, and the plurality of in-network computing requests are sent by a current GPU to the top-layer switch; executing the plurality of stage operations in parallel for a plurality of GPUs in a current subgroup based on the plurality of in-network computing requests; wherein a target group to which the current GPU belongs is divided into a plurality of subgroups, and the current subgroup is a subgroup corresponding to the bottom-layer switch among the plurality of subgroups.

## Description

### Field of the Disclosure

The present disclosure relates to the field of artificial intelligence technology, specifically to the fields of intelligent cloud, network communication, large language models and other technologies. In particular, the present disclosure relates to a method for data processing, apparatus, electronic device, storage medium and computer program product.

### Background of the Disclosure

With the development of Artificial Intelligence (AI) large models, large-scale Graphics Processing Unit (GPU) clusters are required. GPUs in a GPU cluster can exchange data through switches.

In-Network Computing (INC) is an emerging computing paradigm that migrates computing capabilities from traditional computing nodes (such as GPUs) to network devices (such as switches), with network devices performing part of the computing tasks and achieving data transmission and processing simultaneously.

In GPU cluster scenarios, how to implement INC is a problem that needs to be solved.

### Summary of the Disclosure

The present disclosure provides a method for data processing, apparatus, electronic device, storage medium and computer program product.

According to one aspect of the present disclosure, there is provided a method for data processing, which is applied to a bottom-layer switch in a multi-layer switch, wherein the multi-layer switch is configured to complete a target operation, the target operation includes a plurality of stage operations, the method includes: receiving a plurality of in-network computing requests sent by a top-layer switch in the multi-layer switch; wherein the plurality of in-network computing requests correspond to the plurality of stage operations one-to-one, and the plurality of in-network computing requests are sent by a current GPU to the top-layer switch; executing the plurality of stage operations in parallel for a plurality of GPUs in a current subgroup based on the plurality of in-network computing requests; wherein a target group to which the current GPU belongs is divided into a plurality of subgroups, and the current subgroup is a subgroup corresponding to the bottom-layer switch among the plurality of subgroups.

According to another aspect of the present disclosure, there is provided a method for data processing, which is applied to a top-layer switch in a multi-layer switch, wherein the multi-layer switch is configured to complete a target operation, the target operation includes a plurality of stage operations, the method includes: receiving a plurality of in-network computing requests sent by a current GPU, wherein the plurality of in-network computing requests correspond to the plurality of stage operations one-to-one; executing the plurality of stage operations in parallel for a plurality of non-top-layer switches based on the plurality of in-network computing requests; wherein a target group to which the current GPU belongs is divided into a plurality of subgroups, and the plurality of non-top-layer switches correspond to the plurality of subgroups one-to-one.

According to another aspect of the present disclosure, there is provided a method for data processing, which is applied to a GPU, the method includes: obtaining connection information of a top-layer switch in a multi-layer switch; wherein the multi-layer switch is configured to complete a target operation, and the target operation includes a plurality of stage operations; sending a plurality of in-network computing requests to the top-layer switch based on the connection information, wherein the plurality of in-network computing requests correspond to the plurality of stage operations one-to-one; the plurality of in-network computing requests are configured to trigger the top-layer switch and a bottom-layer switch in the multi-layer switch to execute the plurality of stage operations in parallel.

According to another aspect of the present disclosure, there is provided an apparatus for data processing, which is applied to a bottom-layer switch in a multi-layer switch, wherein the multi-layer switch is configured to complete a target operation, the target operation includes a plurality of stage operations, the apparatus includes: a receiving module, configured to receive a plurality of in-network computing requests sent by a top-layer switch in the multi-layer switch; wherein the plurality of in-network computing requests correspond to the plurality of stage operations one-to-one, and the plurality of in-network computing requests are sent by a current GPU to the top-layer switch; a processing module, configured to execute the plurality of stage operations in parallel for a plurality of GPUs in a current subgroup based on the plurality of in-network computing requests; wherein a target group to which the current GPU belongs is divided into a plurality of subgroups, and the current subgroup is a subgroup corresponding to the bottom-layer switch among the plurality of subgroups.

According to another aspect of the present disclosure, there is provided an apparatus for data processing, which is applied to a top-layer switch in a multi-layer switch, wherein the multi-layer switch is configured to complete a target operation, the target operation includes a plurality of stage operations, the apparatus includes: a receiving module, configured to receive a plurality of in-network computing requests sent by a current GPU, wherein the plurality of in-network computing requests correspond to the plurality of stage operations one-to-one; a processing module, configured to execute the plurality of stage operations in parallel for a plurality of non-top-layer switches based on the plurality of in-network computing requests; wherein a target group to which the current GPU belongs is divided into a plurality of subgroups, and the plurality of non-top-layer switches correspond to the plurality of subgroups one-to-one.

According to another aspect of the present disclosure, there is provided an apparatus for data processing, which is applied to a GPU, the apparatus includes: an obtaining module, configured to obtain connection information of a top-layer switch in a multi-layer switch; wherein the multi-layer switch is configured to complete a target operation, and the target operation includes a plurality of stage operations; a sending module, configured to send a plurality of in-network computing requests to the top-layer switch based on the connection information, wherein the plurality of in-network computing requests correspond to the plurality of stage operations one-to-one; the plurality of in-network computing requests are configured to trigger the top-layer switch and a bottom-layer switch in the multi-layer switch to execute the plurality of stage operations in parallel.

According to another aspect of the present disclosure, there is provided an electronic device, including: at least one processor; and a memory communicatively connected to the at least one processor; wherein the memory stores instructions executable by the at least one processor, when the instructions are executed by the at least one processor, the at least one processor is enabled to perform the method according to any of the above aspects.

According to another aspect of the present disclosure, there is provided a non-transitory computer-readable storage medium storing computer instructions, wherein the computer instructions are configured to cause the computer to perform the method according to any of the above aspects.

According to another aspect of the present disclosure, a computer program product is provided, including a computer program, wherein when the computer program is executed by a processor, the method according to any of the above aspects is implemented.

The present disclosure can implement in-network computing in a GPU cluster scenario.

It should be understood that the content described in this section is not intended to identify key or important features of the embodiments of the present disclosure, nor is it used to limit the scope of the present disclosure. Other features of the present disclosure will become readily understood through the following specification.

### Brief Description of Drawings

The drawings are used for better understanding the present solution and do not constitute a limitation of the present disclosure. In the drawings,
Figure 1 is a schematic diagram according to the first embodiment of the present disclosure;
Figure 2 is a schematic diagram of an implementation system for implementing embodiments of the present disclosure;
Figure 3 is a schematic diagram of the operations of each stage performed by a single-layer switch according to the embodiment of the present disclosure;
Figure 4 is a schematic diagram of internal composition of a switch according to embodiments of the present disclosure;
Figure 5 is a schematic diagram of the single-layer switch receiving and sending traffic according to the embodiment of the present disclosure;
Figure 6 is a schematic diagram according to the second embodiment of the present disclosure;
Figure 7 is a schematic diagram of implementation flow of ReduceScatter stage operation according to embodiments of the present disclosure;
Figure 8a is an instruction interaction diagram in request direction corresponding to Figure 7;
Figure 8b is an instruction interaction diagram in response direction corresponding to Figure 7;
Figure 9 is a schematic diagram of implementation flow of AllGather stage operation according to embodiments of the present disclosure;
Figure 10a is an instruction interaction diagram in request direction corresponding to Figure 9;
Figure 10b is an instruction interaction diagram in response direction corresponding to Figure 9;
Figure 11 is a schematic diagram according to the third embodiment of the present disclosure;
Figure 12 is a schematic diagram according to the fourth embodiment of the present disclosure;
Figure 13 is a schematic diagram according to the fifth embodiment of the present disclosure;
Figure 14 is a schematic diagram according to the sixth embodiment of the present disclosure;
Figure 15 is a schematic diagram according to the seventh embodiment of the present disclosure;
Figure 16 is a schematic diagram of an electronic device for implementing the method for data processing according to embodiments of the present disclosure.

### Detailed Description of Preferred Embodiments

The following description of exemplary embodiments of the present disclosure is made in conjunction with the drawings, which includes various details of the embodiments of the present disclosure to aid in understanding, and should be considered merely exemplary. Therefore, those skilled in the art should recognize that various changes and modifications can be made to the embodiments described herein without departing from the scope and spirit of the present disclosure. Similarly, for clarity and conciseness, description of known functions and structures has been omitted from the following description.

For better understanding of the present disclosure, relevant terms are explained as follows:
Graphics Processing Unit (GPU): A microprocessor specifically designed for processing graphics and image-related computations. GPUs play an important role in the field of Artificial Intelligence (AI), as deep learning algorithms (such as neural networks) involve large amounts of matrix operations. The parallel computing capability of GPUs is particularly suitable for processing these operations, therefore, GPUs typically serve as computing nodes in AI scenarios.

Load Instructions and Store Instructions: In GPU computing architecture, load/store instructions are fundamental and crucial operation instructions. Load instructions are used to read data from memory (such as global memory, shared memory, etc.) into GPU registers. Since registers have high-speed read and write performance, storing data in registers facilitates efficient data processing. Store instructions are used to write data from registers to memory for subsequent use or further processing.

Load/store instructions can be further divided into requests and responses. For example, load instructions include: load requests and load responses, while store instructions include: store requests and store responses.

ScaleOut and ScaleUp: These are two different approaches of system expansion.

ScaleOut (Horizontal Scaling): Also known as horizontal expansion, refers to expanding the overall performance and capacity of a system by adding more nodes (such as servers, virtual machines, etc.). These nodes are relatively independent and communicate and collaborate through networks to jointly complete system tasks.

ScaleUp (Vertical Scaling): Also known as vertical expansion, refers to enhancing system processing capability by improving the hardware performance of a single node (such as increasing CPU cores, expanding memory capacity, upgrading to faster hard drives, etc.).

GPU ScaleUp: A network architecture designed to achieve efficient expansion and collaborative work of GPU resources. It mainly improves computing power by increasing the number of GPUs within a single node (such as adding plurality of GPUs in one server).

AllReduce Operation: A communication operation commonly used in distributed computing, mainly for data reduction among a plurality of computing nodes. Specifically, in an AllReduce operation involving a plurality of nodes, each node has its original data (local data). The AllReduce operation performs a specified Reduce operation (such as sum, average, maximum, etc.) on the original data from all nodes to obtain reduced data (global data), then distributes the reduced data results to all nodes, so that all nodes have the same reduced data.

Based on AllReduce operations, gradient synchronization can be achieved.

Gradient Synchronization is an important concept in distributed deep learning training.

In distributed deep learning training, a plurality of computing nodes (such as a plurality of servers, plurality of GPUs, etc.) are typically used to train models in parallel. Each computing node calculates gradients of model parameters based on original data. Gradient synchronization refers to aggregating and integrating gradient information calculated on various computing nodes to maintain consistent gradients across all nodes, and then updating model parameters based on the synchronized gradients.

AllReduce operations can be divided into two stages: the ReduceScatter stage and the AllGather stage.

ReduceScatter Stage: Distributes data to various nodes for partial reduction. Specifically, each node divides original data according to certain rules into multiple parts, performs Reduce operations on its part of data with corresponding parts from other nodes, obtaining local reduced data corresponding to itself on each node.

AllGather Stage: After obtaining local reduced data in the ReduceScatter stage, the AllGather stage is responsible for aggregating local reduced data from various nodes to obtain global reduced data, ensuring each node has the same global reduced data.

Specifically, taking the plurality of GPUs A and B involved in an AllReduce operation as an example, both A and B can divide their original data into two parts. For example, data on A is represented as (a0, a1), and data on B is represented as (b0, b1).

In the ReduceScatter stage, each GPU obtains its corresponding local reduced data. Taking sum as the Reduce operation, A's local reduced data would be a0+b0, and B's local reduced data would be a1+b1.

In the AllGather stage, local reduced data from each GPU is aggregated to obtain global reduced data, which is then distributed to each GPU. For example, the global reduced data is (a0+b0, a1+b1), after which both A and B store this global reduced data (a0+b0, a1+b1).

For instance, assuming the original data is (1, 2) on A and the original data on B is (3, 4), taking the Reduce operation as a sum, in the ReduceScatter stage, the local reduced data on A is (4) and the local reduced data on B is (6). In the AllGather stage, after aggregation, the global reduced data becomes (4, 6). Therefore, the final result of the AllReduce operation is (4, 6), and the same global reduced data (4, 6) is stored on both A and B.

Ring Algorithm: An algorithm for implementing AllReduce operations. It connects all nodes into a logical ring, where data is passed sequentially along the ring. Each node receives data from the previous node, performs Reduce operations with its own data, and then passes it to the next node. After several rounds of circulation, each node obtains the reduction result of data from all nodes.

Based on the Ring algorithm, the ReduceScatter stage and AllGather stage are executed serially. Considering transmission time, the total time consumption formula for AllReduce operation is: $T_AllReduce = T_ReduceScatter + T_AllGather = \left(\left(2\left(N-1\right)\right)/N\right) * \left(S/B\right)$ Where:
T_AllReduce is the total time consumption of AllReduce operation;
T_ReduceScatter is the time consumption of ReduceScatter stage;
T_AllGather is the time consumption of AllGather stage;
N is the total number of nodes involved in AllReduce operation;
S is the data volume of original data on each node;
B is network bandwidth.
Pipeline parallelism: A parallel strategy that breaks down a complex computational task into a plurality of consecutive stages, like a factory assembly line. Each stage handles a portion of the task, and different stages can execute different batches of data in parallel to improve overall processing speed.

For example, the overall data can be divided into different batches, such as a first data and a second data. Execute a first stage operation on the first data to get a first stage result of the first data, then execute second stage operation on the first stage result of the first data, and meanwhile, execute the first stage operation on the second data in parallel. This way, executing different batches of data in different stages in parallel can improve overall processing speed.

Network Convergence Ratio (NCR): Used to measure the ratio between uplink bandwidth and downlink bandwidth in a network. It describes the ratio between total bandwidth of low-bandwidth links and bandwidth of high-bandwidth link when a plurality of low-bandwidth links converge to one high-bandwidth link. For example, in a network where 10 links with 1Gbps bandwidth converge to one link with 10Gbps bandwidth, the network convergence ratio is 1:1.

Switches can be divided into single-layer switches and multi-layer switches.

Single-layer switch refers to a switch with single-layer structure, generally referring to access layer switch.

Multi-layer switch refers to a switch with multi-layer structure. Taking two layers as an example, they can be called access layer switch and aggregation layer switch respectively.

Access layer switch, which can be represented as L0 switch, directly connects to GPUs in GPU scenarios and serves as the entry point for data entering the network.

Aggregation layer switch, which can be represented as L1 switch, is the upper-layer switch of access layer switches, aggregating and integrating traffic from a plurality of access layer switches.

To implement in-network computing, the present disclosure provides the following embodiments.

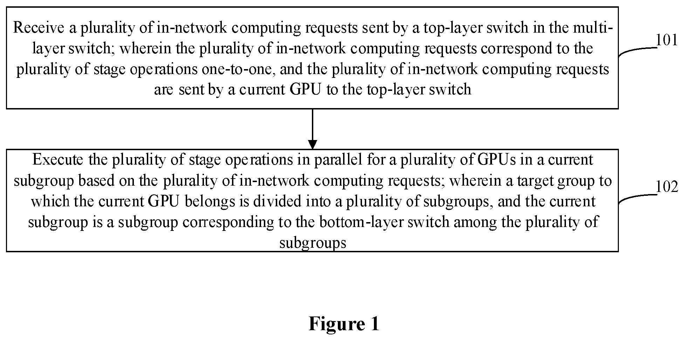

Figure 1 is a schematic diagram according to the first embodiment of the present disclosure. The present embodiment provides a method for data processing, applied to a bottom-layer switch in a multi-layer switch, wherein the multi-layer switch is configured to complete a target operation, and the target operation includes a plurality of stage operations. The method includes steps of:
101. Receiving a plurality of in-network computing requests sent by a top-layer switch in the multi-layer switch; wherein the plurality of in-network computing requests correspond to the plurality of stage operations one-to-one, and the plurality of in-network computing requests are sent by a current GPU to the top-layer switch.
102. Executing the plurality of stage operations in parallel for a plurality of GPUs in a current subgroup based on the plurality of in-network computing requests; wherein a target group to which the current GPU belongs is divided into a plurality of subgroups, and the current subgroup is a subgroup corresponding to the bottom-layer switch among the plurality of subgroups.

In a multi-layer switch architecture, the bottom-layer switch refers to the lowest layer switch, which is directly connected to GPUs; the top-layer switch refers to the highest layer switch, which can connect to a plurality of non-top-layer switches.

For example, in a two-layer switch architecture, the two-layer switch includes: access layer switch and aggregation layer switch, with the aggregation layer switch positioned above the access layer switch. Based on this, the bottom-layer switch refers to the access layer switch (represented as L0 switch), and the top-layer switch refers to the aggregation layer switch (represented as L1 switch).

In non-in-network computing scenarios, GPUs perform computations to complete target operations, such as a plurality of GPUs completing AllReduce operations based on the Ring algorithm.

In in-network computing scenarios, and when the switches are multi-layer switches, the multi-layer switches perform in-network computing, such as bottom-layer switches and top-layer switches cooperating to jointly complete target operations.

The current GPU is the GPU that triggers the switch to perform in-network computing, which can be any GPU in the GPU cluster.

An in-network computing request is an instruction used to trigger switches to perform in-network computing.

For example, taking GPU A as an example, when A needs switches to perform in-network computing in a multi-layer switch scenario, it can send in-network computing requests to the top-layer switch in the multi-layer switch to trigger in-network computing, specifically triggering the execution of target operations.

Target operation refers to the specific operation corresponding to in-network computing, which includes a plurality of stage operations.

Each stage operation can be triggered by an in-network computing request.

For example, if the target operation includes a first stage operation and a second stage operation, and in-network computing requests include a first in-network computing request and a second in-network computing request, then the switch executes the first stage operation after receiving the first in-network computing request, and executes the second stage operation after receiving the second in-network computing request.

The target operation is an operation for a plurality of GPUs in the target group where the current GPU is located.

In a multi-layer switch architecture, there are a plurality of bottom-layer switches, with each bottom-layer switch corresponding to a subgroup of the target group.

For example, a plurality of GPUs in the target group include: A, B, C, D, where A and B are connected to the first bottom-layer switch, C and D are connected to the second bottom-layer switch. If the subgroup formed by A and B is called the first subgroup, and the subgroup formed by C and D is called the second subgroup, then the first bottom-layer switch corresponds to the first subgroup, and the second bottom-layer switch corresponds to the second subgroup.

This method can be executed by any bottom-layer switch among the plurality of bottom-layer switches, and the subgroup corresponding to that bottom-layer switch is called the current subgroup.

For example, for the first bottom-layer switch, after the top-layer switch receives an in-network computing request sent by the current GPU, it sends the in-network computing request to the first bottom-layer switch, and the first bottom-layer switch executes the corresponding stage operation based on the in-network computing request.

To improve in-network computing performance, various stage operations are executed in parallel.

For example, after the first bottom-layer switch receives various in-network computing requests, it executes various stage operations in parallel for a plurality of GPUs (such as A and B) in its corresponding current subgroup.

Specifically, if the target operation is an AllReduce operation, which includes ReduceScatter stage operation and AllGather stage operation, then the first bottom-layer switch can execute ReduceScatter stage operation and AllGather stage operation in parallel for A and B.

In the present embodiment, executing target operations through multi-layer switches can achieve in-network computing; moreover, executing a plurality of stage operations of the target operation in parallel can improve in-network computing efficiency and enhance in-network computing performance.

For better understanding of the present disclosure's embodiments, the application scenario is explained as follows.

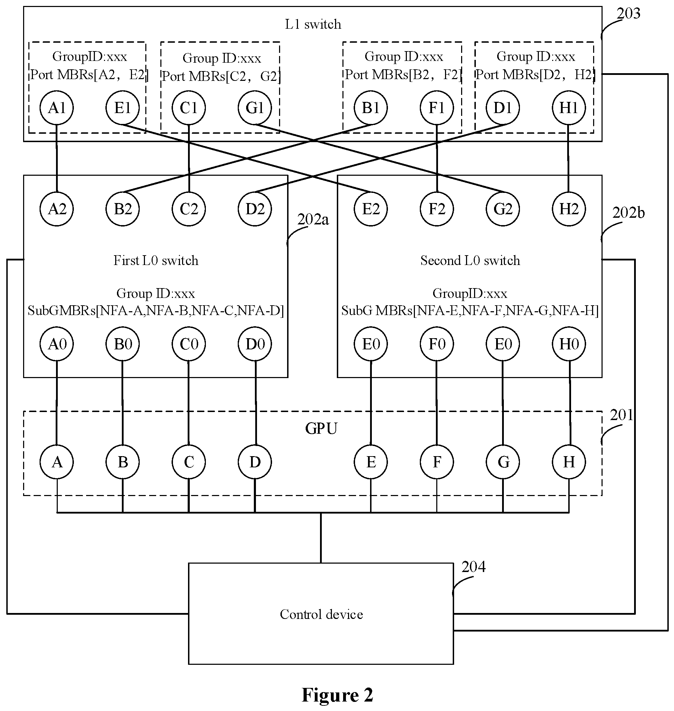

Figure 2 is a schematic diagram of an implementation system for implementing embodiments of the present disclosure.

As shown in Figure 2, the system includes: a plurality of GPUs 201, switches, and a control device 204.

The plurality of GPUs 201 form the target group corresponding to the target operation.

The switches, connected to the plurality of GPUs 201, execute target operations on data from the plurality of GPUs 201.

Control device 204, connected to the plurality of GPUs 201 and switches, provides relevant information needed for target operations, such as group information.

The plurality of GPUs are represented as A~H, with the target group divided into two subgroups: A~D forming the first subgroup, and E~H forming the second subgroup.

Taking a two-layer switch as an example, the bottom-layer switch is the access layer switch, and the top-layer switch is the aggregation layer switch.

Based on the above two subgroups, there are two access layer switches, represented as a first L0 switch 202a and a second L0 switch 202b. The first L0 switch connects to A~D in the first subgroup, while the second L0 switch connects to E~H in the second subgroup.

The aggregation layer switch is represented as L1 switch 203, connecting the first L0 switch and second L0 switch.

L0 switches include downlink ports and uplink ports. Downlink ports connect to GPUs, while uplink ports connect to the L1 switch.

For example, the downlink ports of the first L0 switch include: A0~D0, uplink ports include: A2~D2; the downlink ports of the second L0 switch include: E0~H0, uplink ports include: E2~H2.

L0 switch downlink ports correspond one-to-one with GPUs.

For example, the downlink ports of the first L0 switch A0~D0 connect to GPUs A~D respectively; the downlink ports of the second L0 switch E0~H0 connect to GPUs E~H respectively.

When the network convergence ratio is 1:1, ports of the L1 switch correspond one-to-one with a plurality of GPUs, for example, represented as A1~H1, corresponding to A~H.

The number of uplink ports of the L0 switch is the same as the number of downlink ports. For example, the uplink ports of the first L0 switch include: A2~D2; the uplink ports of the second L0 switch include: E2~H2.

The ports of the L1 switch connect one-to-one with the uplink of ports the L0 switch, such as A1 connecting to A2, B1 connecting to B2, etc.

After GPUs, the L0 switches, and the L1 switch form the network topology, the control device can perceive the topology and generate group information based on the topology.

Group information records group identifiers (group IDs) and corresponding member information.

Group identifiers uniquely identify groups, for example, the target group containing A~H is identified as xxx.

Member information specifically includes Network Fabric Address (NFA) of group members, uniquely identifying each member, such as the NFA of A represented as NFA-A.

In two-layer switch scenarios, group information on each L0 switch can be specifically called subgroup information, recording group ID and corresponding subgroup members. For example, the first L0 switch records group ID xxx with subgroup members [NFA-A,NFA-B,NFA-C,NFA-D]. Ports on each L0 switch can share the same subgroup information.

Group information on the L1 switch can be specifically called port group information, recording group ID and corresponding lower-layer ports. Port group information can be a plurality of groups, with a plurality of ports on the L1 switch sharing the same port group information, for example, A1 and E1 share the same port information recording ports including A2 and E2.

After generating group information, the control device sends it to corresponding switches for data transmission based on respective group information.

Additionally, the control device can send L0 switch port information to GPUs, allowing GPUs to interact with corresponding ports based on this information, for example, A can interact with A0 using the NFA of A0.

Furthermore, GPUs can directly connect to the L1 switch, such as A connecting to the A1 port of the L1 switch. The control device sends The NFA of A1 to A, allowing A to interact with A1 using The NFA of A1.

Based on this, when a GPU (such as A) needs multi-layer switches to perform in-network computing, A directly sends in-network computing requests to the A1 port of the top-layer switch (L1 switch), carrying the current group identifier (such as xxx). The A1 port of the top-layer switch determines corresponding lower-layer ports, such as A2 and E2, based on this current group identifier, and sends the in-network computing requests to lower-layer switches, and so on, until the requests reach bottom-layer switches (L0 switches).

After receiving in-network computing requests, the L0 switch determines subgroup members based on the current group identifier, such as A~D, interacts with these GPUs to obtain original data from them, and performs in-network computing on this original data to complete the target operation.

Taking AllReduce operation as the target operation example, and using single-layer switch architecture for simplified explanation, the implementation process of AllReduce operation is explained as follows.

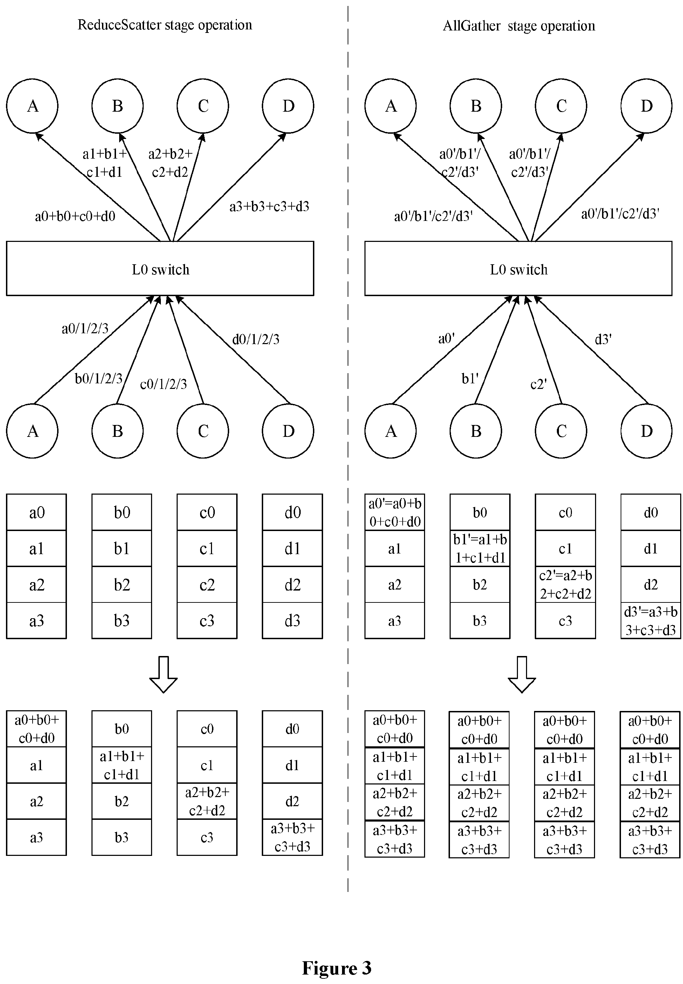

Figure 3 is a schematic diagram of the operations of each stage performed by a single-layer switch according to the embodiment of the present disclosure. In the present embodiment, the target operation is an AllReduce operation as an example.

As shown in Figure 3, taking 4 GPUs as an example, which are represented as A, B, C, D, with the single-layer switch represented as L0 switch.

Original data on each GPU is divided into N parts, where N is the total number of GPUs involved in the AllReduce operation, in the present embodiment, N=4. Based on this, the original data on A includes (a0, a1, a2, a3), the original data on B includes (b0, b1, b2, b3), similarly for C and D.

AllReduce operation is divided into ReduceScatter stage operation and AllGather stage operation.

ReduceScatter stage operation: Each GPU sends its N parts of original data to the L0 switch. For example, A sends its original data (a0, a1, a2, a3) to the L0 switch, represented as a0/1/2/3, B sends its original data (b0, b1, b2, b3) to the L0 switch, represented as b0/1/2/3, similarly for C and D.

The L0 switch performs reduction (such as addition) on each part of original data from different GPUs, obtaining N parts of local reduced data, and distributes them to each GPU.

For example, the 4 parts of local reduced data obtained by the L0 switch are: a0+b0+c0+d0, a1+b1+c1+d1, a2+b2+c2+d2, a3+b3+c3+d3; afterwards, one part is distributed to each GPU, such as sending a0+b0+c0+d0 to A for storage, sending a1+b1+c1+d1 to B for storage, similarly for C and D.

AllGather stage operation: Each GPU sends its one part of local reduced data to the L0 switch, the L0 switch aggregates local reduced data from different GPUs to obtain global reduced data, and distributes the global reduced data to each GPU.

For example, the local reduced data on A is represented as a0', A sends a0' to the L0 switch, B sends b1' to the L0 switch, similarly for C and D.

The L0 switch aggregates these 4 parts of local reduced data to obtain global reduced data, represented as a0'/b1'/c2'/d3', then sends the global reduced data to each GPU, so each GPU stores identical global reduced data.

Where a0'=a0+b0+c0+d0, b1'=a1+b1+c1+d1, c2'=a2+b2+c2+d2, d3'=a3+b3+c3+d3, therefore, A~D all store identical global reduced data (a0+b0+c0+d0, a1+b1+c1+d1, a2+b2+c2+d2, a3+b3+c3+d3).

Thus, AllReduce operation can be completed by executing ReduceScatter stage operation and AllGather stage operation.

The above describes the specific operation process of switches for each stage operation (such as ReduceScatter stage operation and AllGather stage operation). In implementation, these stage operations can specifically be executed by switch ports.

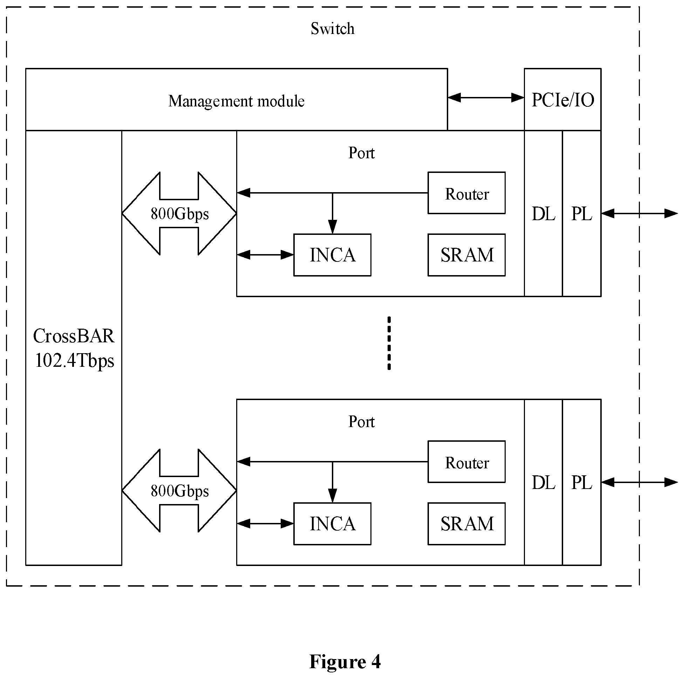

Figure 4 is a schematic diagram of internal composition of a switch according to embodiments of the present disclosure.

As shown in Figure 4, the switch includes ports, and may also include management module, interface module, network transmission module, etc.

The management module, interface module, and network transmission module can be set up in conventional ways: for example, the management module is used for switch configuration, monitoring, management, etc. The interface module is used for communication with other devices, such as PCIe interface or other I/O interfaces. PCIe (Peripheral Component Interconnect Express) is a high-speed serial computer expansion bus standard that enables high-speed data transmission. The network transmission module is used for network data transmission, including Data Link (DL) layer and Physical Link (PL) layer. The PL layer is the physical layer that transmits data through physical links, while the DL layer converts data received by the physical layer into data frames and processes based on data frames.

Ports, in addition to providing conventional routing functions, as shown in Figure 4, can also perform in-network computing in the present embodiment. For example, ports include an In-Network Compute Accelerator (INCA) for performing in-network computing.

Additionally, ports may include memory, such as Static Random Access Memory (SRAM), for storing related data. SRAM is a type of memory with advantages like high speed and low power consumption.

Different ports communicate through an internal interconnection module, such as CrossBAR. CrossBAR is a switching structure composed of a plurality of input ports, a plurality of output ports, and a switch matrix. By controlling the switch states in the switch matrix, connections between any input port and output port can be established, thus completing data exchange and transmission. This structure can support simultaneous data transmission across a plurality of ports, is internally non-blocking, and can improve data processing efficiency.

The bandwidth between ports and CrossBAR is, for example, 800Gbps, and CrossBAR's internal bandwidth is, for example, 102.4Tbps, where bps means bits per second.

In single-layer switch architecture, the single-layer switch is an L0 switch containing ports corresponding one-to-one with a plurality of GPUs. For example, if the plurality of GPUs include A~D, then L0 switch includes A0~D0 corresponding one-to-one with A~D, performing in-network computing on ports A0~D0.

In multi-layer switch architecture, taking L1 switch and L0 switch as examples:
For L1 switch, its ports correspond one-to-one with the plurality of GPUs in the target group.

For example, if the plurality of GPUs in the target group include: A~H, then L1 switch ports include A1~H1, corresponding one-to-one with A~H, performing in-network computing on A1~H1.

For L0 switch, its ports include downlink ports and uplink ports. Downlink ports correspond one-to-one with connected GPUs, uplink ports have the same number as downlink ports, and in-network computing is specifically executed by uplink ports.

Taking the first L0 switch as an example, the downlink ports include: A0~D0, corresponding one-to-one with A~D; the uplink ports include: A2~D2. Taking A2 as an example, A2 can integrate and process data from A0~D0, sending integrated data to A1 for subsequent processing.

By performing in-network computing on switch ports, distributed computing can be achieved, improving computational efficiency.

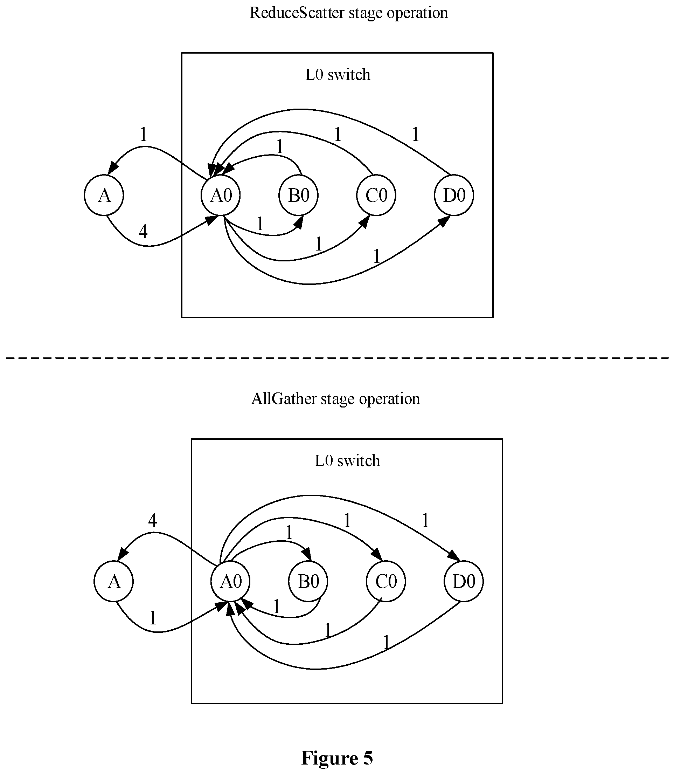

Figure 5 is a schematic diagram of the single-layer switch receiving and sending traffic according to the embodiment of the present disclosure.

In the present embodiment, taking a single-layer switch as an example, represented as L0 switch, assuming L0 switch connects to 4 GPUs represented as A, B, C, D, and port modules on L0 switch corresponding one-to-one with these 4 GPUs are represented as A0, B0, C0, D0.

Taking AllReduce operation as the target operation example for in-network computing, it includes the ReduceScatter stage operation and the AllGather stage operation.

As shown in Figure 5, taking A0 port as an example, the receiving and sending situation is as follows:
For ReduceScatter stage operation:
A0 receives 4 parts of data sent by A; afterwards, A0 sends 1 part of data to each of B0~D0, and receives 1 part of data from each of B0~D0; after reducing these data, A0 sends 1 part of local reduced data to A.

Thus, in the ReduceScatter stage, on the external interconnection between A0 and A, A0 receives 4 parts of data and sends 1 part of data.

For AllGather stage operation:
A0 receives 1 part of data sent by A and 1 part of data each from B~D through B0~D0, and A0 sends one part of data to each of B0~D0; afterwards, A0 aggregates 1 part of data each from A~D to obtain 4 parts of data (global reduced data), sending 4 parts of data to A.

Thus, in the AllGather stage, on the external interconnection between A0 and A, A0 receives 1 part of data and sends 4 parts of data.

Since the ReduceScatter stage operation and the AllGather stage operation are executed in parallel, the data volume transmitted on a single port module (such as A0) of L0 switch = 4+1 = 5 parts of data volume.

Generally, assuming the total number of GPUs is represented as N, and the data volume of original data on each GPU is represented as S, then the data volume transmitted on a single port module of L0 switch = ((N+1)S)/N.

Therefore, the total time consumption of target operation: T_AllReduce=((N+1)S)/(NB).

Referring to the explanation of the Ring algorithm above, the total time consumption of AllReduce operation implemented based on Ring algorithm is: T_AllReduce'=((2(N-1))/N) * (S/B).

When N is large, T_AllReduce' is greater than T_AllReduce. Therefore, the present embodiment can effectively reduce the total time consumption of target operation and improve in-network computing performance by executing a plurality of stage operations of target operation in parallel through port modules.

Additionally, referring back to Figure 5, on the internal interconnection of L0 switch, in the ReduceScatter stage, A0 receives 3 parts of data and sends 3 parts of data, and in the AllGather stage, A0 receives 3 parts of data and sends 3 parts of data.

Generally, in both ReduceScatter and AllGather stages, on the internal interconnection of a single port module of L0 switch, both sending and receiving directions have (N-1) parts of data, where N is the total number of GPUs, such as N=4 mentioned above. Therefore, when ReduceScatter stage operation and AllGather stage operation are executed in parallel, the data volume on internal interconnection = 2*(N-1) parts of data.

Combined with the above description, the data volume on external interconnection = (N+1) parts of data.

To ensure that internal data transmission is completed after external data transmission is completed, the internal interconnection bandwidth of the L0 switch should be (2(N-1))/(N+1) times the external interconnection bandwidth. When N is relatively large, this ratio approaches 2. Therefore, the internal interconnection bandwidth of the L0 switch should be at least twice the external interconnection bandwidth.

Combined with the above application scenario, the present disclosure provides the following embodiments.

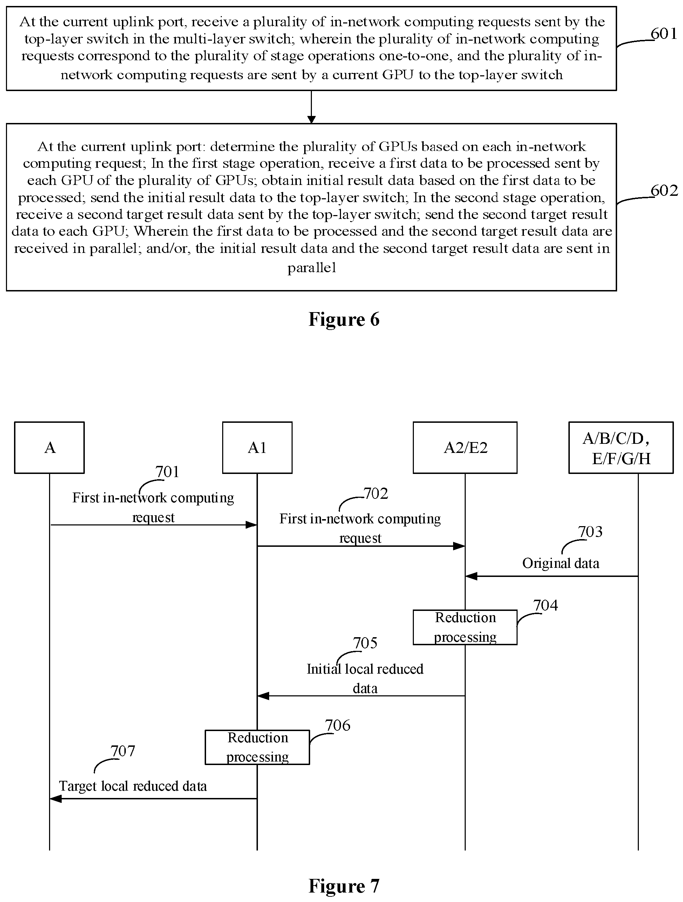

Figure 6 is a schematic diagram according to the second embodiment of the present disclosure. The present embodiment provides a method for data processing, applied to a bottom-layer switch in a multi-layer switch, wherein the multi-layer switch is configured to complete a target operation, and the target operation includes a plurality of stage operations.

In the present embodiment, assume the plurality of stage operations include: first stage operation and second stage operation.

As shown in Figure 6, the method includes steps of:
601. At the current uplink port, receiving a plurality of in-network computing requests sent by the top-layer switch in the multi-layer switch; wherein the plurality of in-network computing requests correspond to the plurality of stage operations one-to-one, and the plurality of in-network computing requests are sent by a current GPU to the top-layer switch.

Wherein, the current uplink port corresponds to the current top-layer port, and the current top-layer port is the port on the top-layer switch connected to the current GPU.

For example, if the current GPU is A, A connects to port A1 on the top-layer switch (such as L1 switch), and uplink port A2 on the bottom-layer switch (such as L0 switch) corresponds to A1, then the current uplink port is A2.

602. At the current uplink port: Determining the plurality of GPUs based on each in-network computing request; In the first stage operation, receiving a first data to be processed sent by each GPU of the plurality of GPUs; obtaining initial result data based on the first data to be processed; sending the initial result data to the top-layer switch; In the second stage operation, receiving a second target result data sent by the top-layer switch; sending the second target result data to each GPU; Wherein the first data to be processed and the second target result data are received in parallel; and/or, the initial result data and the second target result data are sent in parallel.

For each stage operation, the main process includes: receiving data, processing data, and sending data. Since the time consumption of each stage operation is mainly in the transmission process, to reduce the total time consumption of target operation, receiving and sending processes of different stages can be executed in parallel.

Specifically, in a scenario with two stage operations, in the receiving direction of the bottom-layer switch, the first data to be processed corresponding to the first stage operation and the second target result data corresponding to the second stage operation are received in parallel; in the sending direction of the bottom-layer switch, the initial result data corresponding to the first stage operation and the second target result data corresponding to the second stage operation are sent in parallel.

The interaction between the current uplink port and the current GPU can specifically be conducted through the current downlink port, which is the downlink port on the bottom-layer switch connected to the current GPU.

For example, if the current GPU is A, the current uplink port is A2, and the current downlink port is A1, then A2 can interact with A specifically through A1, such as A sending data to A1, and A1 then sending data to A2.

Taking AllReduce operation as the target operation example, the first stage operation is ReduceScatter stage operation, and the second stage operation is AllGather stage operation.

Based on this, for the bottom-layer switch, data received in the first stage operation includes original data on GPU, and data received in the second stage operation includes global reduced data sent by the top-layer switch. Thus, on each port, original data from GPU and global reduced data can be received in parallel.

For the bottom-layer switch, data sent in the first stage operation includes initial local reduced data corresponding to the current port sent to the top-layer switch, and data sent in the second stage operation includes global reduced data sent to GPU. Thus, on each port, initial local reduced data and global reduced data can be sent in parallel.

In this way, data from the plurality of stage operations is included in both receiving and sending directions of each port, fully utilizing the receiving and sending performance of bottom-layer switch ports and improving processing efficiency.

Additionally, the specific parallel strategy for the ReduceScatter stage operation and the AllGather stage operation can be pipeline parallelism, which processes different batches of data in parallel at different stages. Taking the receiving direction of A0 as an example, data involved in the first stage operation and data involved in the second stage operation are specifically different batches of data, such as data for the first stage operation of X and data for the second stage operation of Y, where X and Y are different batches of data.

This ensures the accuracy of data processing and improves the overall reliability of in-network computing.

In the present embodiment, by parallel receiving and sending of data from the plurality of stage operations on bottom-layer switch ports, port receiving and sending performance can be fully utilized, improving in-network computing efficiency.

Below, taking the AllReduce operation as an example, the specific implementation processes of the ReduceScatter stage operation and the AllGather stage operation included in the AllReduce operation are described respectively.

Wherein, the in-network computing request corresponding to the ReduceScatter stage operation is called the first in-network computing request, and the in-network computing request corresponding to the AllGather stage operation is called the second in-network computing request.

For the ReduceScatter stage operation:
The first data to be processed received by port A2 of the bottom-layer switch includes: original data on each GPU; the initial result data obtained after A2 reduces original data from each GPU includes: initial local reduced data corresponding to A2.

The initial result data received by port A1 of the top-layer switch includes: initial local reduced data corresponding to its lower-layer ports (A2 and E2); the first target result data obtained after A1 reduces initial local reduced data from each port includes: target local reduced data corresponding to the current GPU (A).

For the AllGather stage operation:
The second data to be processed received by port A1 of the top-layer switch includes: a target local reduced data corresponding to each GPU; after A1 aggregates these target local reduced data, the obtained second target result data is global reduced data.

Port A2 of the bottom-layer switch receives global reduced data sent by A1 and sends the global reduced data to each GPU in the subgroup.

Combining the above explanation, target operations can specifically be implemented by ports on switches.

Assuming the current GPU is A, the port connected to A on the L1 switch is A1, the lower-layer ports corresponding to A1 on the L0 switch include: A2 and E2, and the port connected to A on the L0 switch is A0. Below, taking A1 and A0 as examples, the implementation processes of the ReduceScatter stage operation and the AllGather stage operation are described respectively.

Figure 7 is a schematic diagram of implementation flow of ReduceScatter stage operation according to embodiments of the present disclosure.

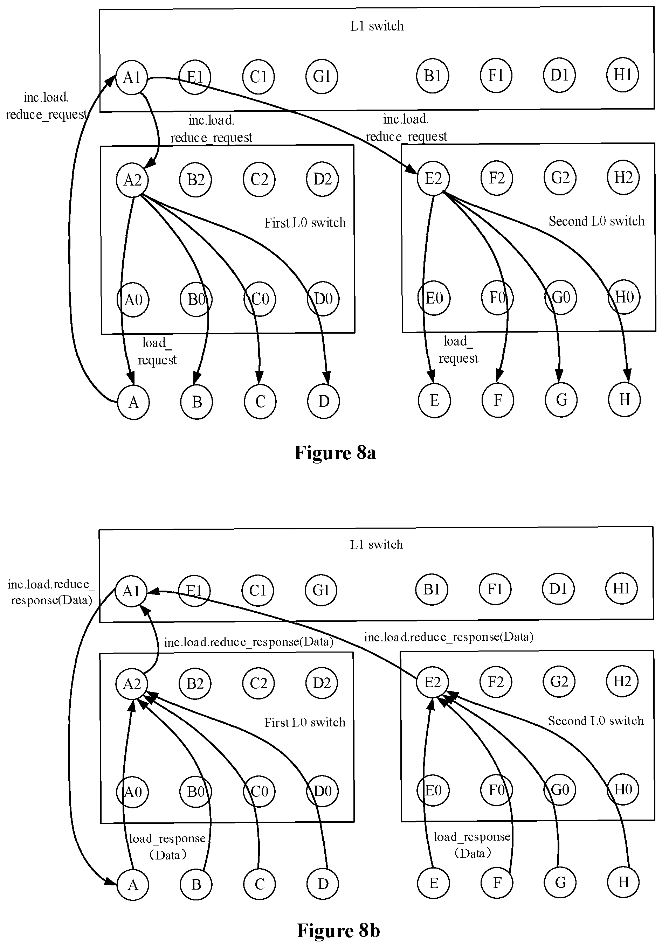

Figure 8a is an instruction interaction diagram in request direction corresponding to Figure 7.

Figure 8b is an instruction interaction diagram in response direction corresponding to Figure 7.

As shown in Figure 7, the method includes steps of:
701. A sending the first in-network computing request to A1.

Wherein, the first in-network computing request is used to trigger the execution of the ReduceScatter stage operation.

Referring to Figure 8a, the first in-network computing request can be represented as inc.load.reduce_request.

702. A1 sending the first in-network computing request to a plurality of ports.

Wherein, the first in-network computing request can carry current group identifier (such as xxx), A1 obtains lower-layer ports corresponding to the current group identifier as the above plurality of ports, such as A2 and E2, based on pre-established correspondence between group identifiers and lower-layer ports.

Additionally, since A2 connects to A1, A1 can send the first in-network computing request directly to A2, and since E2 connects to E1, A1 can interact with E2 through E1.

In the present embodiment, the plurality of ports can be efficiently determined based on the current group identifier carried in the in-network computing request, enabling efficient subsequent communication and operations.

Afterwards, A2 and E2 have similar execution processes, taking A2 as an example below.

703. A2 receiving original data on each GPU in the current subgroup based on the first in-network computing request.

Wherein, after A2 receives the first in-network computing request, A2 can determine a plurality of CPUs in the current subgroup, such as A~D, based on the current group identifier (such as xxx) contained in the first in-network computing request and pre-established correspondence between group identifiers and subgroup members.

In the present embodiment, subgroup members can be efficiently determined based on the current group identifier carried in the in-network computing request, enabling efficient subsequent communication and operations.

Afterwards, A2 can interact with a plurality of CPUs in the current subgroup to obtain original data from each GPU.

Specifically, A2 can interact with each GPU through downlink ports connected to each GPU. For example, A2 interacts with A through A0, with B through B0, etc.

Furthermore, the L0 switch can interact with GPUs through load instructions.

For example, as shown in Figure 8a, A0 sends a load_request to A to trigger A to feedback original data.

After receiving the load request, each GPU can send a load_response to the corresponding port, carrying corresponding original data.

For example, as shown in Figure 8b, A sends a load_response to A0, carrying original data on A.

704. A2 performing reduction processing on original data from each GPU to obtain initial local reduced data corresponding to A2.

For example, taking addition as reduction processing, the calculated initial local reduced data is (a0+b0+c0+d0) of A2.

705. A2 sending the initial local reduced data to A1.

Specifically, as shown in Figure 8b, A2 can send the first in-network computing response (inc.load.reduce_response) to A1, carrying initial local reduced data.

Similarly, E2 also sends its corresponding initial local reduced data (e0+f0+g0+h0) to A1.

706. A1 performing reduction processing on initial local reduced data corresponding to each port to obtain target local reduced data corresponding to A.

Wherein, A1 can receive initial local reduced data sent by A2 and E2, then reduce these initial local reduced data to obtain target local reduced data corresponding to A, such as (a0+b0+c0+d0+e0+f0+g0+h0).

707. A1 sending the target local reduced data corresponding to A to A.

For example, A1 directly sends target local reduced data to A through their direct connection.

Specifically, as shown in Figure 8b, A1 can send the first in-network computing response (inc.load.reduce_response) to A, carrying target local reduced data corresponding to A.

**In** the present embodiment, the above process can accurately and efficiently implement ReduceScatter stage operation in multi-layer switch scenarios.

Furthermore, interaction between L0 switch and GPU can be efficiently conducted through load instructions.

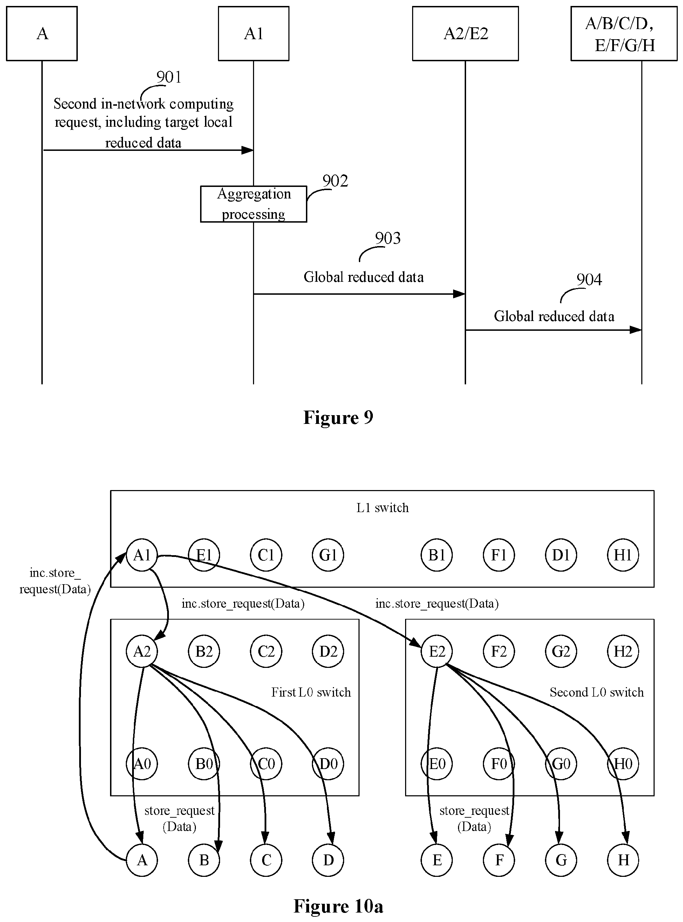

Figure 9 is a schematic diagram of implementation flow of AllGather stage operation according to embodiments of the present disclosure.

Figure 10a is an instruction interaction diagram in request direction corresponding to Figure 9.

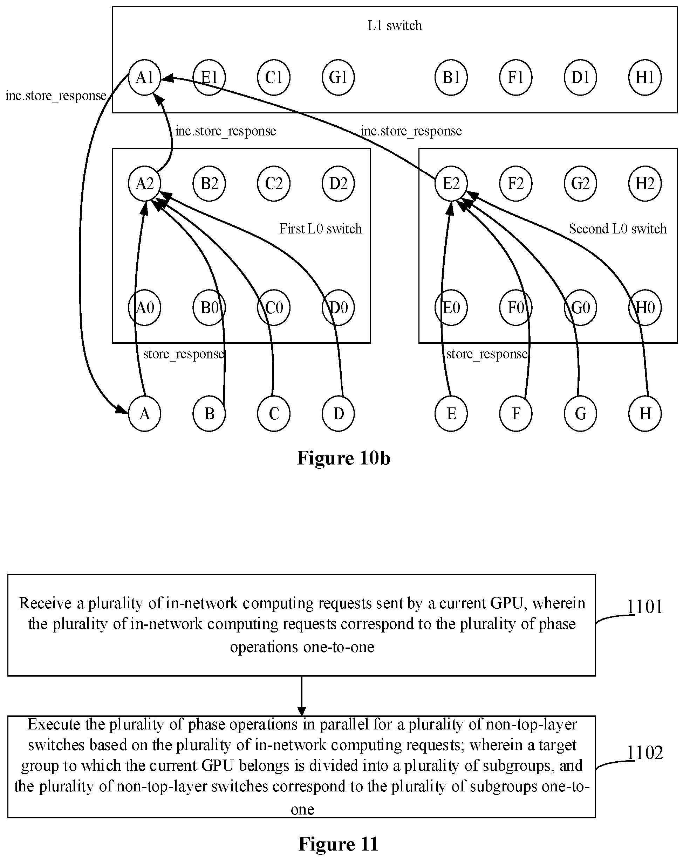

Figure 10b is an instruction interaction diagram in response direction corresponding to Figure 9.

As shown in Figure 9, the method includes steps of:
901. A sending the second in-network computing request to A1.

Wherein, the second in-network computing request is used to trigger the execution of the AllGather stage operation.

Referring to Figure 10a, the second in-network computing request can be represented as inc. store_request.

902. A1 performing aggregation processing on target local reduced data sent by each GPU in the target group to obtain global reduced data.

Wherein, the second in-network computing request contains target local reduced data, such as the second in-network computing request of A containing the target local reduced data of A, like (a0+b0+c0+d0+e0+f0+g0+h0). In this way, A1 can obtain target local reduced data from each GPU from the second in-network computing request, and after aggregating these target local reduced data, obtain global reduced data, such as (a0+...+h0,a7+...+h7).

903. A1 sending global reduced data to bottom-layer switch.

Wherein, the second in-network computing request can carry current group identifier (such as xxx), A1 obtains lower-layer ports corresponding to the current group identifier, such as A2 and E2, based on pre-established correspondence between group identifiers and lower-layer ports.

Afterwards, A1 can carry global reduced data in the second in-network computing request and send it to bottom-layer switch through A2 and E2.

In the present embodiment, lower-layer ports can be efficiently determined based on the current group identifier carried in the in-network computing request, enabling efficient subsequent communication and operations.

904. Bottom-layer switch sending global reduced data to each GPU in its corresponding subgroup.

Taking A2 as an example, A2 sends global reduced data to each GPU, such as sending to A through A0, to B through B0.

Specifically, after receiving the first in-network computing request, A2 can determine a plurality of CPUs in the current subgroup, such as A~D, based on the current group identifier (such as xxx) contained in the first in-network computing request and pre-established correspondence between group identifiers and subgroup members, then send global reduced data to each GPU in the current subgroup.

In the present embodiment, subgroup members can be efficiently determined based on the current group identifier carried in the in-network computing request, enabling efficient subsequent communication and operations.

Furthermore, the L0 switch can interact with GPU through store instructions.

For example, as shown in Figure 10a, A0 sends a store request (load_request) to A, carrying global reduced data.

Additionally, each GPU can also respond after receiving the store request.

For example, as shown in Figure 10b, A sends a store response (load_response) to A0, indicating that its GPU has completed the target operation; A0 can forward the store response to A2, and after A2 receives store responses from each GPU in its corresponding subgroup, it sends a second in-network computing response (inc.store_response) to A1, indicating that its bottom-layer switch has completed the target operation; after A1 receives responses from each bottom-layer switch, it sends a second in-network computing response (inc.store_response) to A, indicating that the overall target operation is complete.

In the present embodiment, the above process can accurately and efficiently implement AllGather stage operation in multi-layer switch scenarios.

Furthermore, interaction between the L0 switch and GPU can be efficiently conducted through store instructions.

Figure 11 is a schematic diagram according to the third embodiment of the present disclosure. The present embodiment provides a method for data processing applied to a top-layer switch in a multi-layer switch, wherein the multi-layer switch is configured to complete a target operation, the target operation includes a plurality of phase operations, and the method includes:
1101: Receiving a plurality of in-network computing requests sent by a current GPU, wherein the plurality of in-network computing requests correspond to the plurality of phase operations one-to-one.
1102: Executing the plurality of phase operations in parallel for a plurality of non-top-layer switches based on the plurality of in-network computing requests; wherein a target group to which the current GPU belongs is divided into a plurality of subgroups, and the plurality of non-top-layer switches correspond to the plurality of subgroups one-to-one.

Wherein, in a multi-layer switch architecture, a bottom-layer switch refers to the lowest layer switch that directly connects to GPUs; a top-layer switch refers to the highest layer switch that can connect to a plurality of non-top-layer switches.

For example, in a two-layer switch architecture, the two-layer switches include: access layer switches and aggregation layer switches, with aggregation layer switches above access layer switches. Based on this, bottom-layer switches refer to access layer switches, which can be represented as L0 switches, and top-layer switches refer to aggregation layer switches, which can be represented as L1 switches.

In non-in-network computing scenarios, GPUs perform computations to complete target operations, such as a plurality of GPUs completing the AllReduce operations based on the Ring algorithm.

In in-network computing scenarios with multi-layer switches, the multi-layer switches perform in-network computing, such as bottom-layer switches and top-layer switches cooperating to complete target operations together.

The current GPU is the GPU that triggers the switch to perform in-network computing, which can be any GPU in the GPU cluster.

An in-network computing request is an instruction used to trigger switches to perform in-network computing.

For example, taking GPU A as an example, when A needs switches to perform in-network computing in a multi-layer switch scenario, it can send in-network computing requests to the top-layer switch in the multi-layer switch to trigger in-network computing, specifically triggering the execution of the target operation.

A target operation refers to the specific operation corresponding to in-network computing, which includes a plurality of phase operations.

Each phase operation can be triggered by an in-network computing request.

For example, if the target operation includes a first phase operation and a second phase operation, and the in-network computing requests include a first in-network computing request and a second in-network computing request, then the switch executes the first phase operation after receiving the first in-network computing request, and executes the second phase operation after receiving the second in-network computing request.

The target operation is an operation for a plurality of GPUs in the target group to which the current GPU belongs.

In a multi-layer switch architecture, there are a plurality of bottom-layer switches, with each bottom-layer switch corresponding to a subgroup of the target group.

For example, if the plurality of GPUs in the target group include: A, B, C, and D, where A and B are connected to the first bottom-layer switch, and C and D are connected to the second bottom-layer switch, assuming the subgroup formed by A and B is called the first subgroup, and the subgroup formed by C and D is called the second subgroup, then the first bottom-layer switch corresponds to the first subgroup, and the second bottom-layer switch corresponds to the second subgroup.

This method can be executed by the top-layer switch in the multi-layer switch.

A plurality of non-top-layer switches refer to the switches below the top-layer switch corresponding to each subgroup.

For example, based on the aforementioned two-layer switches, the plurality of non-top-layer switches include: the first L0 switch and the second L0 switch.

That is, from the perspective of the top-layer switch, it treats the lower non-top-layer switches as GPUs, similar to the interaction between bottom-layer switches and a plurality of GPUs, the top-layer switch interacts with a plurality of non-top-layer switches to complete the target operation.

To improve in-network computing performance, the phase operations are executed in parallel.

For example, after the first bottom-layer switch receives each in-network computing request, it executes each phase operation in parallel for a plurality of GPUs (such as A and B) in its corresponding current subgroup.

Specifically, if the target operation is the AllReduce operation, which includes a ReduceScatter phase operation and an AllGather phase operation, then the first bottom-layer switch can execute the ReduceScatter phase operation and AllGather phase operation in parallel for A and B.

In the present embodiment, by having the multi-layer switch execute the target operation, in-network computing can be achieved; and by executing a plurality of phase operations included in the target operation in parallel, in-network computing efficiency can be improved, enhancing in-network computing performance.

In some embodiments, the plurality of in-network computing requests are received by a current top port connected to the current GPU;

The plurality of phase operations include: a first phase operation and a second phase operation;

The executing the plurality of phase operations in parallel for a plurality of non-top-layer switches based on each in-network computing request includes:
Determining a plurality of ports corresponding to the plurality of non-top-layer switches based on each in-network computing request at the current top port;
In the first phase operation, receiving initial result data sent by each port of the plurality of ports; obtaining a first target result data based on the initial result data; sending the first target result data to the current GPU;
In the second phase operation, receiving second data to be processed sent by each GPU in the target group; obtaining a second target result data based on the second data to be processed; sending the second target result data to the bottom-layer switch in the multi-layer switch, so that the bottom-layer switch sends the second target result data to each of the GPUs;
Wherein the initial result data and the second data to be processed are received in parallel; and/or, the first target result data and the second target result data are sent in parallel.

For each phase operation, the main process includes: receiving data, processing data, and sending data. Since the time consumption of each phase operation is mainly in the transmission process, to reduce the total time consumption of the target operation, the receiving and sending processes of different phases can be executed in parallel.

Specifically, in a scenario with two phase operations, in the receiving direction of the top-layer switch, the initial result data corresponding to the first phase operation and the second data to be processed corresponding to the second phase operation are received in parallel; in the sending direction of the top-layer switch, the first target result data corresponding to the first phase operation and the second target result data corresponding to the second phase operation are sent in parallel.

For example, referring back to Figure 2, assuming the current GPU is A, then the current top port is A1, and A1 can directly receive each in-network computing request sent by A, determine a plurality of corresponding ports based on each in-network computing request, such as A2 and E2 corresponding to A1, then, taking A2 as an example, determine corresponding subgroup members through A2, such as A~D, complete the target operation through the interaction among A1, A2 and A~D, as well as A1, E2 and E~H.

Taking the AllReduce operation as an example of the target operation, the first phase operation is the ReduceScatter phase operation, and the second phase operation is the AllGather phase operation.

Based on this, for the top-layer switch, the data received in the first phase operation includes the initial local reduction data sent by the non-top-layer switches from GPUs, and the data received in the second phase operation includes the target local reduction data from GPUs. On each port, the initial local reduction data and target local reduction data can be received in parallel.

For the top-layer switch, the data sent in the first phase operation includes the target local reduction data sent to GPUs, and the data sent in the second phase operation includes the global reduction data sent to non-top-layer switches. On each port, the target local reduction data and global reduction data can be sent in parallel.

In this way, by including data from a plurality of phase operations in both receiving and sending directions on each port, the receiving and sending performance of the top-layer switch ports can be fully utilized, improving processing efficiency.

Additionally, the specific parallel strategy for ReduceScatter phase operations and AllGather phase operations can be pipeline parallelismism, where different batches of data are processed in parallel at different stages. Taking A0's receiving direction as an example, the data involved in the first phase operation and the data involved in the second phase operation are specifically different batches of data, such as data for the first phase operation of X and data for the second phase operation of Y, where X and Y are different batches of data.

**In** this way, the accuracy of data processing can be ensured, improving the overall reliability of in-network computing.

**In** the present embodiment, by performing parallel receiving and sending of data for a plurality of phase operations on the ports of the top-layer switch, the receiving and sending performance of the ports can be fully utilized, improving in-network computing efficiency.
In some embodiments, each in-network computing request contains a current group identifier of the target group;
The determining the plurality of ports corresponding to the plurality of non-top-layer switches based on each in-network computing request includes:
   determining the plurality of ports as lower-layer ports corresponding to the current group identifier based on a pre-established correspondence between group identifiers and lower-layer ports.

For example, for the first phase operation, referring to Figure 7, the first in-network computing request contains a current group identifier, such as xxx. After A1 receives the first in-network computing request, it can determine the plurality of ports including A2 and E2 based on this current group identifier and the pre-established correspondence, and then interact with A2 and E2.

For the second phase operation, referring to Figure 9, the second in-network computing request contains a current group identifier, such as xxx. After A1 receives the second in-network computing request, it can determine the plurality of ports including A2 and E2 based on this current group identifier and the pre-established correspondence, and then interact with A2 and E2.

In the present embodiment, based on the current group identifier carried in the in-network computing request, a plurality of ports can be determined efficiently and conveniently, enabling efficient subsequent communication and operations.
In some embodiments, the target operation is an AllReduce operation;
The first phase operation includes: a ReduceScatter phase operation;
The initial result data includes: initial local reduction data corresponding to each port;
The first target result data includes: target local reduction data corresponding to the current GPU;
The receiving initial result data sent by each port of the plurality of ports; obtaining a first target result data based on the initial result data; sending the first target result data to the current GPU includes:
   receiving the initial local reduction data sent by each of the ports;
   performing a reduction processing on the initial local reduction data to obtain the target local reduction data corresponding to the current GPU;
   sending the target local reduction data corresponding to the current GPU to the current GPU.

For example, referring to Figure 7, A1 can receive initial local reduction data sent by A2 and initial local reduction data sent by E2. After A1 performs reduction on these initial local reduction data, it obtains target local reduction data corresponding to A, and then sends it directly to A through the first in-network computing response.

In the present embodiment, through the above process, the ReduceScatter phase operation can be accurately and efficiently implemented in a multi-layer switch scenario.
In some embodiments, the target operation is an AllReduce operation;
The second phase operation includes: an AllGather phase operation;
The second data to be processed includes: target local reduction data on each GPU;
The second target result data includes: global reduction data;
The obtaining second target result data based on the second data to be processed includes:
   performing aggregation processing on the target local reduction data on each GPU to obtain the global reduction data.

For example, referring to Figure 7, A1 can receive target local reduction data from each GPU, perform aggregation on these target local reduction data to obtain global reduction data, send the global reduction data to A2 and E2, then through A2 send it to A~D, and through E2 send it to E~H, so that each GPU has the same global reduction data.

In the present embodiment, through the above process, the AllGather phase operation can be accurately and efficiently implemented in a multi-layer switch scenario.

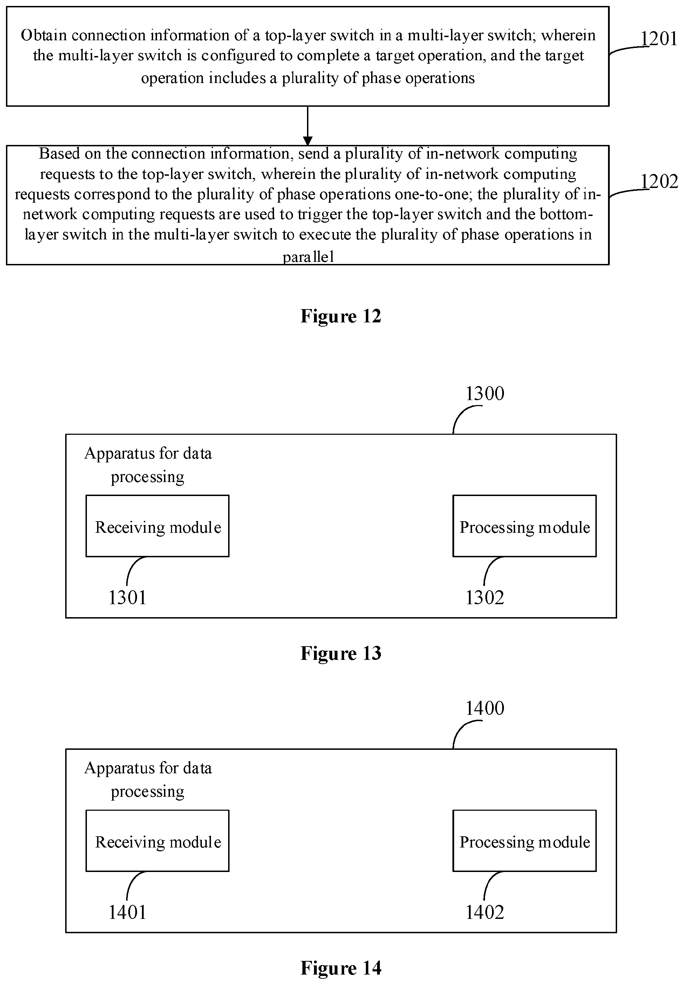

Figure 12 is a schematic diagram according to the fourth embodiment of the present disclosure. The present embodiment provides a method for data processing applied to a GPU, which includes:
1201: Obtaining connection information of a top-layer switch in a multi-layer switch; wherein the multi-layer switch is configured to complete a target operation, and the target operation includes a plurality of phase operations.
1202: Based on the connection information, sending a plurality of in-network computing requests to the top-layer switch, wherein the plurality of in-network computing requests correspond to the plurality of phase operations one-to-one; the plurality of in-network computing requests are used to trigger the top-layer switch and the bottom-layer switch in the multi-layer switch to execute the plurality of phase operations in parallel.

In in-network computing scenarios, a GPU can send in-network computing requests to the top-layer switch in the multi-layer switch to trigger the multi-layer switch to perform in-network computing.

The GPU can specifically send in-network computing requests to the top-layer switch based on connection information.

The connection information can specifically be the address information of the port connected to the GPU, such as The NFA of A1, so that A can directly send in-network computing requests to port A1.

After receiving each in-network computing request, the top-layer switch sends each in-network computing request to the bottom-layer switch, and both the top-layer switch and bottom-layer switch execute each phase operation in parallel based on each in-network computing request to complete the target operation.

For specific execution processes of the top-layer switch and bottom-layer switch, please refer to the related embodiments described above.

In the present embodiment, from the GPU's perspective, the GPU does not need to be aware of the entire network architecture or the entire data transmission process. The GPU only needs to send in-network computing requests to the top-layer switch to trigger the execution of in-network computing, and during the computation process, use load/store instructions to interact with the bottom-layer switch, making the implementation simple and feasible for the GPU.

In some embodiments, the plurality of in-network computing requests are sent to a current top port connected to the GPU, the plurality of phase operations include: a first phase operation and a second phase operation, enabling the top-layer switch to execute the following:
At the current top port, determine a plurality of ports corresponding to the plurality of non-top-layer switches based on each in-network computing request; in the first phase operation, receive initial result data sent by each port of the plurality of ports; obtain a first target result data based on the initial result data; send the first target result data to the current GPU; in the second phase operation, receive second data to be processed sent by each GPU in the target group; obtain a second target result data based on the second data to be processed; send the second target result data to the bottom-layer switch in the multi-layer switch, so that the bottom-layer switch sends the second target result data to each GPU; wherein the initial result data and the second data to be processed are received in parallel; and/or, the first target result data and the second target result data are sent in parallel.

In the present embodiment, by performing the parallel receiving and sending of data for a plurality of phase operations on each port of the switch, the receiving and sending performance of the ports can be fully utilized, improving in-network computing efficiency.

In some embodiments, each in-network computing request contains a current group identifier of the target group, enabling the top-layer switch to determine the plurality of ports as lower-layer ports corresponding to the current group identifier based on a pre-established correspondence between group identifiers and lower-layer ports.

In the present embodiment, based on the current group identifier carried in the in-network computing request, a plurality of ports can be determined efficiently and conveniently, enabling efficient subsequent communication and operations.
In some embodiments, the target operation is an AllReduce operation;
The first phase operation includes: a ReduceScatter phase operation;
The first data to be processed includes: original data on each GPU;
The initial result data includes: initial local reduction data corresponding to each port;
The first target result data includes: target local reduction data corresponding to the current GPU;
Correspondingly, the method may also include:
   receiving a load request sent by the bottom-layer switch and sending a load response to the bottom-layer switch, wherein the load response contains original data on the GPU.

In the present embodiment, interaction between the L0 switch and GPU can be performed efficiently and conveniently through load instructions.

Furthermore, the method may also include:
receiving the target local reduction data corresponding to the GPU sent by the top-layer switch; wherein the target local reduction data is obtained after the top-layer switch performs reduction processing on the initial local reduction data sent by each port.

In the present embodiment, through the above process, the ReduceScatter phase operation can be accurately and efficiently implemented in a multi-layer switch scenario.
In some embodiments, the target operation is an AllReduce operation;
The second phase operation includes: an AllGather phase operation;
The second data to be processed includes: target local reduction data on each GPU;
The second target result data includes: global reduction data;
Correspondingly, the method may also include:
   sending the target local reduction data on the GPU to the top-layer switch, enabling the top-layer switch to perform aggregation processing on the target local reduction data on each GPU to obtain the global reduction data.

In the present embodiment, through the above process, the AllGather phase operation can be accurately and efficiently implemented in a multi-layer switch scenario.

Furthermore, the method may also include:
receiving a store request sent by the bottom-layer switch, wherein the store request contains the global reduction data.

In the present embodiment, interaction between the L0 switch and GPU can be performed efficiently and conveniently through store instructions.

For specific implementation content, please refer to the related descriptions in the above embodiments.

Figure 13 is a schematic diagram according to the fifth embodiment of the present disclosure. The present embodiment provides an apparatus for data processing, applied to a bottom-layer switch in a multi-layer switch, wherein the multi-layer switch is configured to complete a target operation, the target operation includes a plurality of phase operations, and the apparatus 1300 includes: a receiving module 1301 and a processing module 1302.

The receiving module 1301 is configured to receive a plurality of in-network computing requests sent by the top-layer switch in the multi-layer switch; wherein the plurality of in-network computing requests correspond to the plurality of phase operations one-to-one, and the plurality of in-network computing requests are sent by a current GPU to the top-layer switch; the processing module 1302 is configured to execute the plurality of phase operations in parallel for a plurality of GPUs in a current subgroup based on the plurality of in-network computing requests; wherein a target group to which the current GPU belongs is divided into a plurality of subgroups, and the current subgroup is a subgroup corresponding to the bottom-layer switch among the plurality of subgroups.

In a multi-layer switch architecture, a bottom-layer switch refers to the lowest layer switch that directly connects to GPUs; a top-layer switch refers to the highest layer switch that can connect to a plurality of non-top-layer switches.

For example, in a two-layer switch architecture, the two-layer switches include: access layer switches and aggregation layer switches, with aggregation layer switches above access layer switches. Based on this, bottom-layer switches refer to access layer switches, which can be represented as L0 switches, and top-layer switches refer to aggregation layer switches, which can be represented as L1 switches.

In non-in-network computing scenarios, GPUs perform computations to complete target operations, such as a plurality of GPUs completing AllReduce operations based on the Ring algorithm.

In in-network computing scenarios with multi-layer switches, the multi-layer switches perform in-network computing, such as bottom-layer switches and top-layer switches cooperating to complete target operations together.

The current GPU is the GPU that triggers the switch to perform in-network computing, which can be any GPU in the GPU cluster.

An in-network computing request is an instruction used to trigger switches to perform in-network computing.

For example, taking GPU A as an example, when A needs switches to perform in-network computing in a multi-layer switch scenario, it can send in-network computing requests to the top-layer switch in the multi-layer switch to trigger in-network computing, specifically triggering the execution of the target operation.

A target operation refers to the specific operation corresponding to in-network computing, which includes a plurality of phase operations.

Each phase operation can be triggered by an in-network computing request.

For example, if the target operation includes a first phase operation and a second phase operation, and the in-network computing requests include a first in-network computing request and a second in-network computing request, then the switch executes the first phase operation after receiving the first in-network computing request, and executes the second phase operation after receiving the second in-network computing request.

The target operation is an operation for a plurality of GPUs in the target group to which the current GPU belongs.

In a multi-layer switch architecture, there are a plurality of bottom-layer switches, with each bottom-layer switch corresponding to a subgroup of the target group.

For example, if the plurality of GPUs in the target group include: A, B, C, and D, where A and B are connected to the first bottom-layer switch, and C and D are connected to the second bottom-layer switch, assuming the subgroup formed by A and B is called the first subgroup, and the subgroup formed by C and D is called the second subgroup, then the first bottom-layer switch corresponds to the first subgroup, and the second bottom-layer switch corresponds to the second subgroup.

This method can be executed by any bottom-layer switch among a plurality of bottom-layer switches, and the subgroup corresponding to that bottom-layer switch is called the current subgroup.

For example, for the first bottom-layer switch, after the top-layer switch receives an in-network computing request sent by the current GPU, it sends the in-network computing request to the first bottom-layer switch, and the first bottom-layer switch executes the corresponding phase operation based on the in-network computing request.

To improve in-network computing performance, the phase operations are executed in parallel.

For example, after the first bottom-layer switch receives each in-network computing request, it executes each phase operation in parallel for a plurality of GPUs (such as A and B) in its corresponding current subgroup.

Specifically, if the target operation is an AllReduce operation, which includes a ReduceScatter phase operation and an AllGather phase operation, then the first bottom-layer switch can execute the ReduceScatter phase operation and AllGather phase operation in parallel for A and B.

In the present embodiment, by having the multi-layer switch execute the target operation, in-network computing can be achieved; and by executing a plurality of phase operations included in the target operation in parallel, in-network computing efficiency can be improved, enhancing in-network computing performance.

In some embodiments, the plurality of in-network computing requests are received by a current uplink port; the current uplink port corresponds to a current top port, and the current top port is a port on the top-layer switch connected to the current GPU;

The plurality of phase operations include: a first phase operation and a second phase operation;

The processing module 1302 is further configured to:
At the current uplink port, determine the plurality of GPUs based on each in-network computing request;
In the first phase operation, receive a first data to be processed sent by each GPU of the plurality of GPUs; obtain initial result data based on the first data to be processed; send the initial result data to the top-layer switch;
In the second phase operation, receive a second target result data sent by the top-layer switch; send the second target result data to each of the GPUs;
Wherein the first data to be processed and the second target result data are received in parallel; and/or, the initial result data and the second target result data are sent in parallel.

In the present embodiment, by performing the parallel receiving and sending of data for a plurality of phase operations on the ports of the bottom-layer switch, the receiving and sending performance of the ports can be fully utilized, improving in-network computing efficiency.

In some embodiments, each in-network computing request contains a current group identifier of the target group; the processing module 1302 is further configured to:
Determine the plurality of GPUs as subgroup members corresponding to the current group identifier based on a pre-established correspondence between group identifiers and subgroup members.

In the present embodiment, based on the current group identifier carried in the in-network computing request, subgroup members can be determined efficiently and conveniently, enabling efficient subsequent communication and operations.
In some embodiments, the target operation is an AllReduce operation;
The first phase operation includes: a ReduceScatter phase operation;
The first data to be processed includes: original data on each GPU;
The initial result data includes: initial local reduction data corresponding to the current uplink port;
The processing module 1302 is further configured to:
   Perform reduction processing on the original data on each GPU to obtain the initial local reduction data.

In the present embodiment, through the above process, the ReduceScatter phase operation can be accurately and efficiently implemented in a multi-layer switch scenario.

In some embodiments, the processing module 1302 is further configured to:
Send load requests to each of the GPUs, wherein the load requests are used to trigger each of the GPUs to send original data;
Receive load responses sent by each of the GPUs, wherein the load responses contain the original data on each of the GPUs.

In the present embodiment, interaction between the L0 switch and GPU can be performed efficiently and conveniently through load instructions.
In some embodiments, the target operation is an AllReduce operation;
The second phase operation includes: an AllGather phase operation;
The second target result data includes: global reduction data;
The processing module 1302 is further configured to:
   Send store requests to each of the GPUs, wherein the store requests contain the global reduction data.

In the present embodiment, through the above process, the AllGather phase operation can be accurately and efficiently implemented in a multi-layer switch scenario.

Furthermore, interaction between the L0 switch and GPU can be performed efficiently and conveniently through store instructions.

Figure 14 is a schematic diagram according to the sixth embodiment of the present disclosure. The present embodiment provides an apparatus for data processing, applied to a top-layer switch in a multi-layer switch, wherein the multi-layer switch is configured to complete a target operation, the target operation includes a plurality of phase operations, and the apparatus 1400 includes: a receiving module 1401 and a processing module 1402.

The receiving module 1401 is configured to receive a plurality of in-network computing requests sent by a current GPU, wherein the plurality of in-network computing requests correspond to the plurality of phase operations one-to-one; the processing module 1402 is configured to execute the plurality of phase operations in parallel for a plurality of non-top-layer switches based on the plurality of in-network computing requests; wherein a target group to which the current GPU belongs is divided into a plurality of subgroups, and the plurality of non-top-layer switches correspond to the plurality of subgroups one-to-one.

In a multi-layer switch architecture, a bottom-layer switch refers to the lowest layer switch that directly connects to GPUs; a top-layer switch refers to the highest layer switch that can connect to a plurality of non-top-layer switches.

For example, in a two-layer switch architecture, the two-layer switches include: access layer switches and aggregation layer switches, with aggregation layer switches above access layer switches. Based on this, bottom-layer switches refer to access layer switches, which can be represented as L0 switches, and top-layer switches refer to aggregation layer switches, which can be represented as L1 switches.

In non-in-network computing scenarios, GPUs perform computations to complete target operations, such as a plurality of GPUs completing AllReduce operations based on the Ring algorithm.

In in-network computing scenarios with multi-layer switches, the multi-layer switches perform in-network computing, such as bottom-layer switches and top-layer switches cooperating to complete target operations together.

The current GPU is the GPU that triggers the switch to perform in-network computing, which can be any GPU in the GPU cluster.

An in-network computing request is an instruction used to trigger switches to perform in-network computing.

For example, taking GPU A as an example, when A needs switches to perform in-network computing in a multi-layer switch scenario, it can send in-network computing requests to the top-layer switch in the multi-layer switch to trigger in-network computing, specifically triggering the execution of the target operation.

A target operation refers to the specific operation corresponding to in-network computing, which includes a plurality of phase operations.

Each phase operation can be triggered by an in-network computing request.

For example, if the target operation includes a first phase operation and a second phase operation, and the in-network computing requests include a first in-network computing request and a second in-network computing request, then the switch executes the first phase operation after receiving the first in-network computing request, and executes the second phase operation after receiving the second in-network computing request.

The target operation is an operation for a plurality of GPUs in the target group to which the current GPU belongs.

In a multi-layer switch architecture, there are a plurality of bottom-layer switches, with each bottom-layer switch corresponding to a subgroup of the target group.

For example, if the plurality of GPUs in the target group include: A, B, C, and D, where A and B are connected to the first bottom-layer switch, and C and D are connected to the second bottom-layer switch, assuming the subgroup formed by A and B is called the first subgroup, and the subgroup formed by C and D is called the second subgroup, then the first bottom-layer switch corresponds to the first subgroup, and the second bottom-layer switch corresponds to the second subgroup.

This method can be executed by the top-layer switch in the multi-layer switch.

A plurality of non-top-layer switches refer to the switches below the top-layer switch corresponding to each subgroup.

For example, based on the aforementioned two-layer switches, the plurality of non-top-layer switches include: the first L0 switch and the second L0 switch.

That is, from the perspective of the top-layer switch, it treats the lower non-top-layer switches as GPUs, similar to the interaction between bottom-layer switches and a plurality of GPUs, the top-layer switch interacts with a plurality of non-top-layer switches to complete the target operation.

To improve in-network computing performance, the phase operations are executed in parallel.

For example, after the first bottom-layer switch receives each in-network computing request, it executes each phase operation in parallel for a plurality of GPUs (such as A and B) in its corresponding current subgroup.

Specifically, if the target operation is an AllReduce operation, which includes a ReduceScatter phase operation and an AllGather phase operation, then the first bottom-layer switch can execute the ReduceScatter phase operation and AllGather phase operation in parallel for A and B.

In the present embodiment, by having the multi-layer switch execute the target operation, in-network computing can be achieved; and by executing a plurality of phase operations included in the target operation in parallel, in-network computing efficiency can be improved, enhancing in-network computing performance.

In some embodiments, the plurality of in-network computing requests are received by a current top port connected to the current GPU;

The plurality of phase operations include: a first phase operation and a second phase operation;

The processing module 1402 is further configured to:
At the current top port, determine a plurality of ports corresponding to the plurality of non-top-layer switches based on each in-network computing request;
In the first phase operation, receive initial result data sent by each port of the plurality of ports; obtain a first target result data based on the initial result data; send the first target result data to the current GPU;
In the second phase operation, receive a second data to be processed sent by each GPU in the target group; obtain a second target result data based on the second data to be processed; send the second target result data to the bottom-layer switch in the multi-layer switch, so that the bottom-layer switch sends the second target result data to each of the GPUs;
Wherein the initial result data and the second data to be processed are received in parallel; and/or, the first target result data and the second target result data are sent in parallel.

In the present embodiment, by performing the parallel receiving and sending of data for a plurality of phase operations on the ports of the top-layer switch, the receiving and sending performance of the ports can be fully utilized, improving in-network computing efficiency.

In some embodiments, each in-network computing request contains a current group identifier of the target group; the processing module is further configured to:
Determine the plurality of ports as lower-layer ports corresponding to the current group identifier based on a pre-established correspondence between group identifiers and lower-layer ports.

In the present embodiment, based on the current group identifier carried in the in-network computing request, a plurality of ports can be determined efficiently and conveniently, enabling efficient subsequent communication and operations.
In some embodiments, the target operation is an AllReduce operation;
The first phase operation includes: a ReduceScatter phase operation;
The initial result data includes: initial local reduction data corresponding to each port;
The first target result data includes: target local reduction data corresponding to the current GPU;
The processing module 1402 is further configured to:
   Receive the initial local reduction data sent by each of the ports;
   Perform reduction processing on the initial local reduction data to obtain the target local reduction data corresponding to the current GPU;
   Send the target local reduction data corresponding to the current GPU to the current GPU.

In the present embodiment, through the above process, the ReduceScatter phase operation can be accurately and efficiently implemented in a multi-layer switch scenario.
In some embodiments, the target operation is an AllReduce operation;
The second phase operation includes: an AllGather phase operation;
The second data to be processed includes: target local reduction data on each GPU;
The second target result data includes: global reduction data;
The processing module is further configured to:
   Perform aggregation processing on the target local reduction data on each GPU to obtain the global reduction data.

In the present embodiment, through the above process, the AllGather phase operation can be accurately and efficiently implemented in a multi-layer switch scenario.

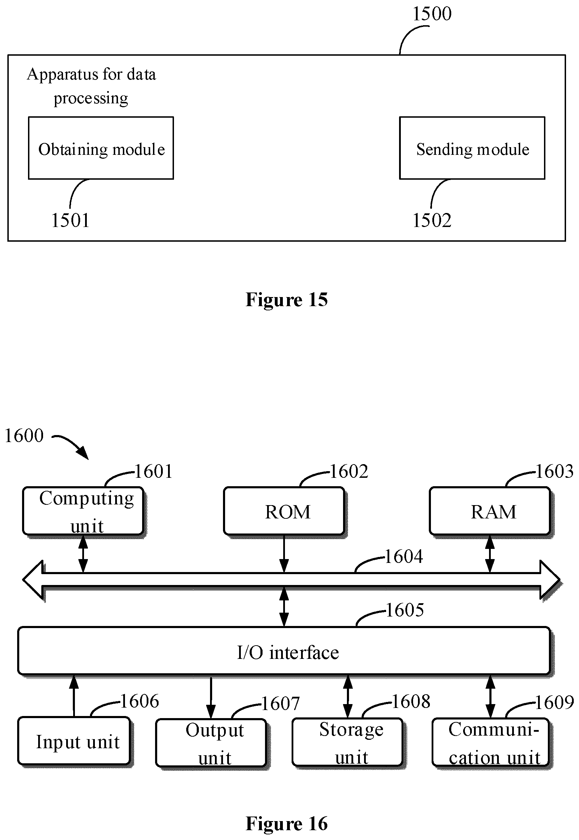

Figure 15 is a schematic diagram according to the seventh embodiment of the present disclosure. The present embodiment provides an apparatus for data processing, applied to a GPU, and the apparatus 1500 includes: an obtaining module 1501 and a sending module 1502.

The obtaining module 1501 is configured to obtain connection information of a top-layer switch in a multi-layer switch; wherein the multi-layer switch is configured to complete a target operation, and the target operation includes a plurality of phase operations; the sending module 1502 is configured to send a plurality of in-network computing requests to the top-layer switch based on the connection information, wherein the plurality of in-network computing requests correspond to the plurality of phase operations one-to-one; the plurality of in-network computing requests are used to trigger the top-layer switch and the bottom-layer switch in the multi-layer switch to execute the plurality of phase operations in parallel.

In in-network computing scenarios, a GPU can send in-network computing requests to the top-layer switch in the multi-layer switch to trigger the multi-layer switch to perform in-network computing.

The GPU can specifically send in-network computing requests to the top-layer switch based on connection information.

The connection information can specifically be the address information of the port connected to the GPU, such as The NFA of A1, so that A can directly send in-network computing requests to port A1.

After receiving each in-network computing request, the top-layer switch sends each in-network computing request to the bottom-layer switch, and both the top-layer switch and bottom-layer switch execute each phase operation in parallel based on each in-network computing request to complete the target operation.

For specific execution processes of the top-layer switch and bottom-layer switch, please refer to the related embodiments described above.

In the present embodiment, from the perspective of the GPU, the GPU does not need to be aware of the entire network architecture or the entire data transmission process. The GPU only needs to send in-network computing requests to the top-layer switch to trigger the execution of in-network computing, and during the computation process, use load/store instructions to interact with the bottom-layer switch, making the implementation simple and feasible for the GPU.

In some embodiments, the plurality of in-network computing requests are sent to a current top port connected to the GPU, the plurality of phase operations include: a first phase operation and a second phase operation, enabling the top-layer switch to execute the following:
At the current top port, determine a plurality of ports corresponding to the plurality of non-top-layer switches based on each in-network computing request; in the first phase operation, receive initial result data sent by each port of the plurality of ports; obtain a first target result data based on the initial result data; send the first target result data to the current GPU; in the second phase operation, receive a second data to be processed sent by each GPU in the target group; obtain a second target result data based on the second data to be processed; send the second target result data to the bottom-layer switch in the multi-layer switch, so that the bottom-layer switch sends the second target result data to each GPU; wherein the initial result data and the second data to be processed are received in parallel; and/or, the first target result data and the second target result data are sent in parallel.

In the present embodiment, by performing the parallel receiving and sending of data for a plurality of phase operations on each port of the switch, the receiving and sending performance of the ports can be fully utilized, improving in-network computing efficiency.

In some embodiments, each in-network computing request contains a current group identifier of the target group, enabling the top-layer switch to determine the plurality of ports as lower-layer ports corresponding to the current group identifier based on a pre-established correspondence between group identifiers and lower-layer ports.

In the present embodiment, based on the current group identifier carried in the in-network computing request, a plurality of ports can be determined efficiently and conveniently, enabling efficient subsequent communication and operations.
In some embodiments, the target operation is an AllReduce operation;
The first phase operation includes: a ReduceScatter phase operation;
The first data to be processed includes: original data on each GPU;
The initial result data includes: initial local reduction data corresponding to each port;
The first target result data includes: target local reduction data corresponding to the current GPU;
Correspondingly, the apparatus 1500 further includes:
   A first feedback module, configured to receive a load request sent by the bottom-layer switch and send a load response to the bottom-layer switch, wherein the load response contains original data on the GPU.

In the present embodiment, interaction between the L0 switch and GPU can be performed efficiently and conveniently through load instructions.

In some embodiments, the apparatus 1500 further includes:
A first receiving module, configured to receive the target local reduction data corresponding to the GPU sent by the top-layer switch; wherein the target local reduction data is obtained after the top-layer switch performs reduction processing on the initial local reduction data sent by each port.

In the present embodiment, through the above process, the ReduceScatter phase operation can be accurately and efficiently implemented in a multi-layer switch scenario.
In some embodiments, the target operation is an AllReduce operation;
The second phase operation includes: an AllGather phase operation;
The second data to be processed includes: target local reduction data on each GPU;
The second target result data includes: global reduction data;
Correspondingly, the apparatus 1500 further includes:
   A second feedback module, configured to send the target local reduction data on the GPU to the top-layer switch, enabling the top-layer switch to perform aggregation processing on the target local reduction data on each GPU to obtain the global reduction data.

In the present embodiment, through the above process, the AllGather phase operation can be accurately and efficiently implemented in a multi-layer switch scenario.

In some embodiments, the apparatus 1500 further includes:
A second receiving module, configured to receive a store request sent by the bottom-layer switch, wherein the store request contains the global reduction data.

In the present embodiment, interaction between the L0 switch and GPU can be performed efficiently and conveniently through store instructions.

It can be understood that in the embodiments of this disclosure, identical or similar content in different embodiments can be cross-referenced.

It can be understood that in the embodiments of this disclosure, terms like "the first" "the second" etc. are only used for distinction and do not indicate importance level, temporal sequence, etc.

It can be understood that unless specifically restricted, the temporal relationships between steps in the processes are not limited.

In the technical solutions of this disclosure, the collection, storage, use, processing, transmission, provision, and disclosure of user personal information comply with relevant laws and regulations and do not violate public order and good morals.

According to the embodiments of this disclosure, this disclosure also provides an electronic device, a readable storage medium, and a computer program product.

Figure 16 is a block diagram of an example electronic device 1600 that can be used to implement an embodiment of the present disclosure. The electronic device 1600 is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Figure 16, the electronic device 1600 includes a computing unit 1601 which may perform various appropriate actions and processing operations according to a computer program stored in a read only memory (ROM) 1602 or a computer program loaded from a storage unit 1608 into a random access memory (RAM) 1603. Various programs and data necessary for the operation of the device 1600 may be also stored in the RAM 1603. The computing unit 1601, the ROM 1602, and the RAM 1603 are connected with one other through a bus 1604. An input/output (I/O) interface 1605 is also connected to the bus 1604.

The plural components in the device 1600 are connected to the I/O interface 1605, and include: an input unit 1606, such as a keyboard, a mouse, or the like; an output unit 1607, such as various types of displays, speakers, or the like; the storage unit 1608, such as a magnetic disk, an optical disk, or the like; and a communication unit 1609, such as a network card, a modem, a wireless communication transceiver, or the like. The communication unit 1609 allows the device 1600 to exchange information/data with other devices through a computer network, such as the Internet, and/or various telecommunication networks.

The computing unit 1601 may be a variety of general and/or special purpose processing components with processing and computing capabilities. Some examples of the computing unit 1601 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 1601 performs the methods and processing operations described above, such as the method for training a question solving model or the question solving method. For example, in some embodiments, the method for training a question solving model or the question solving method may be implemented as a computer software program tangibly included in a machine readable medium, such as the storage unit 1608.

In some embodiments, part or all of the computer program may be loaded and/or installed into the device 1600 via the ROM 1602 and/or the communication unit 1609. When the computer program is loaded into the RAM 1603 and executed by the computing unit 1601, one or more steps of the method for training a question solving model or the question solving method described above may be performed. Alternatively, in other embodiments, the computing unit 1601 may be configured to perform the method for training a question solving model or the question solving method by any other suitable means (for example, by means of firmware).

Various implementations of the systems and technologies described herein may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided for a processor or a controller of a general purpose computer, a special purpose computer, or training apparatuses of other programmable vehicle positioning or positioning models, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may include or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A method for data processing, which is applied to a bottom-layer switch in a multi-layer switch, wherein the multi-layer switch is configured to complete a target operation, the target operation comprises a plurality of stage operations, the method comprises:
receiving (101) a plurality of in-network computing requests sent by a top-layer switch in the multi-layer switch; wherein the plurality of in-network computing requests correspond to the plurality of stage operations one-to-one, and the plurality of in-network computing requests are sent by a current GPU to the top-layer switch;
executing (102) the plurality of stage operations in parallel for a plurality of GPUs in a current subgroup based on the plurality of in-network computing requests;
wherein a target group to which the current GPU belongs is divided into a plurality of subgroups, and the current subgroup is a subgroup corresponding to the bottom-layer switch among the plurality of subgroups.

2. The method according to claim 1, wherein,
the plurality of in-network computing requests are received by a current uplink port; the current uplink port corresponds to a current top-layer port, and the current top-layer port is a port on the top-layer switch connected to the current GPU;
the plurality of stage operations comprise: a first stage operation and a second stage operation;
the executing the plurality of stage operations in parallel for a plurality of GPUs in a current subgroup based on the plurality of in-network computing requests comprises:
determining the plurality of GPUs based on each in-network computing request at the current uplink port;
in the first stage operation, receiving a first data to be processed sent by each GPU of the plurality of GPUs; obtaining initial result data based on the first data to be processed; sending the initial result data to the top-layer switch;
in the second stage operation, receiving a second target result data sent by the top-layer switch; sending the second target result data to each of the GPUs;
wherein the first data to be processed and the second target result data are received in parallel; and/or, the initial result data and the second target result data are sent in parallel.

3. The method according to claim 2, wherein,
each in-network computing request comprises a current group identifier of the target group;
the determining the plurality of GPUs based on each in-network computing request comprises:
determining subgroup members corresponding to the current group identifier based on a pre-established correspondence between group identifiers and subgroup members as the plurality of GPUs.

4. The method according to claim 2, wherein,
the target operation is an AllReduce operation;
the first stage operation comprises: a ReduceScatter stage operation;
the first data to be processed comprises: original data on each of the GPUs;
the initial result data comprises: initial local reduction data corresponding to the current uplink port;
the obtaining initial result data based on the first data to be processed comprises:
performing reduction processing on the original data on each of the GPUs to obtain the initial local reduction data, preferably
wherein, the receiving the first data to be processed sent by each GPU of the plurality of GPUs comprises:
sending a load request to each of the GPUs, wherein the load request is configured to trigger each of the GPUs to send original data;
receiving a load response sent by each of the GPUs, wherein the load response comprises the original data on each of the GPUs.

5. The method according to claim 2, wherein,
the target operation is an AllReduce operation;
the second stage operation comprises: an AllGather stage operation;
the second target result data comprises: global reduction data;
the sending the second target result data to each of the GPUs comprises:
sending a storage request to each of the GPUs, wherein the storage request comprises the global reduction data.

6. A method for data processing, which is applied to a top-layer switch in a multi-layer switch, wherein the multi-layer switch is configured to complete a target operation, the target operation comprises a plurality of stage operations, the method comprises:
receiving (1101) a plurality of in-network computing requests sent by a current GPU, wherein the plurality of in-network computing requests correspond to the plurality of stage operations one-to-one;
executing (1102) the plurality of stage operations in parallel for a plurality of non-top-layer switches based on the plurality of in-network computing requests;
wherein a target group to which the current GPU belongs is divided into a plurality of subgroups, and the plurality of non-top-layer switches correspond to the plurality of subgroups one-to-one.

7. The method according to claim 6, wherein,
the plurality of in-network computing requests are received by a current top-layer port connected to the current GPU;
the plurality of stage operations comprise: a first stage operation and a second stage operation;
the executing the plurality of stage operations in parallel for the plurality of non-top-layer switches based on the plurality of in-network computing requests comprises:
determining a plurality of ports corresponding to the plurality of non-top-layer switches based on each in-network computing request at the current top-layer port;
in the first stage operation, receiving initial result data sent by each port of the plurality of ports; obtaining a first target result data based on the initial result data; sending the first target result data to the current GPU;
in the second stage operation, receiving a second data to be processed sent by each GPU in the target group; obtaining a second target result data based on the second data to be processed; sending the second target result data to the bottom-layer switch in the multi-layer switch, so that the bottom-layer switch sends the second target result data to each of the GPUs;
wherein the initial result data and the second data to be processed are received in parallel; and/or, the first target result data and the second target result data are sent in parallel.

8. The method according to claim 7, wherein,
each in-network computing request comprises a current group identifier of the target group;
the determining the plurality of ports corresponding to the plurality of non-top-layer switches based on each in-network computing request comprises:
determining the plurality of ports as lower-layer ports corresponding to the current group identifier based on a pre-established correspondence between group identifiers and lower-layer ports,
or preferably, wherein
the target operation is an AllReduce operation;
the first stage operation comprises: a ReduceScatter stage operation;
the initial result data comprises: initial local reduction data corresponding to each of the ports;
the first target result data comprises: target local reduction data corresponding to the current GPU;
the receiving initial result data sent by each port of the plurality of ports; obtaining the first target result data based on the initial result data; sending the first target result data to the current GPU comprises:
receiving the initial local reduction data sent by each of the ports;
performing reduction processing on the initial local reduction data to obtain the target local reduction data corresponding to the current GPU;
sending the target local reduction data corresponding to the current GPU to the current GPU,
or preferably, wherein
the target operation is an AllReduce operation;
the second stage operation comprises: an AllGather stage operation;
the second data to be processed comprises: target local reduction data on each of the GPUs;
the second target result data comprises: global reduction data;
the obtaining second target result data based on the second data to be processed comprises:
performing aggregation processing on the target local reduction data on each of the GPUs to obtain the global reduction data.

9. A method for data processing, which is applied to a GPU, the method comprises:
obtaining (1201) connection information of a top-layer switch in a multi-layer switch; wherein the multi-layer switch is configured to complete a target operation, and the target operation comprises a plurality of stage operations;
sending (1202) a plurality of in-network computing requests to the top-layer switch based on the connection information, wherein the plurality of in-network computing requests correspond to the plurality of stage operations one-to-one; the plurality of in-network computing requests are configured to trigger the top-layer switch and a bottom-layer switch in the multi-layer switch to execute the plurality of stage operations in parallel.

10. An apparatus (1300) for data processing, which is applied to a bottom-layer switch in a multi-layer switch, wherein the multi-layer switch is configured to complete a target operation, the target operation comprises a plurality of stage operations, the apparatus comprises:
a receiving module (1301), configured to receive a plurality of in-network computing requests sent by a top-layer switch in the multi-layer switch; wherein the plurality of in-network computing requests correspond to the plurality of stage operations one-to-one, and the plurality of in-network computing requests are sent by a current GPU to the top-layer switch;
a processing module (1302), configured to execute the plurality of stage operations in parallel for a plurality of GPUs in a current subgroup based on the plurality of in-network computing requests;
wherein a target group to which the current GPU belongs is divided into a plurality of subgroups, and the current subgroup is a subgroup corresponding to the bottom-layer switch among the plurality of subgroups.

11. An apparatus (1400) for data processing, which is applied to a top-layer switch in a multi-layer switch, wherein the multi-layer switch is configured to complete a target operation, the target operation comprises a plurality of stage operations, the apparatus comprises:
a receiving module (1401), configured to receive a plurality of in-network computing requests sent by a current GPU, wherein the plurality of in-network computing requests correspond to the plurality of stage operations one-to-one;
a processing module (1402), configured to execute the plurality of stage operations in parallel for a plurality of non-top-layer switches based on the plurality of in-network computing requests;
wherein a target group to which the current GPU belongs is divided into a plurality of subgroups, and the plurality of non-top-layer switches correspond to the plurality of subgroups one-to-one.

12. An apparatus (1500) for data processing, which is applied to a GPU, the apparatus comprises:
an obtaining module (1501), configured to obtain connection information of a top-layer switch in a multi-layer switch; wherein the multi-layer switch is configured to complete a target operation, and the target operation comprises a plurality of stage operations;
a sending module (1502), configured to send a plurality of in-network computing requests to the top-layer switch based on the connection information, wherein the plurality of in-network computing requests correspond to the plurality of stage operations one-to-one; the plurality of in-network computing requests are configured to trigger the top-layer switch and a bottom-layer switch in the multi-layer switch to execute the plurality of stage operations in parallel.

13. An electronic device, comprising:
at least one processor; and
a memory communicatively connected to the at least one processor; wherein,
the memory stores instructions executable by the at least one processor, when the instructions are executed by the at least one processor, the at least one processor is enabled to perform the method according to any one of claims 1-9.

14. A non-transitory computer-readable storage medium storing computer instructions, wherein the computer instructions are configured to cause the computer to perform the method according to any one of claims 1-9.

15. A computer program product comprising a computer program, wherein when the computer program is executed by a processor, the method according to any one of claims 1-9 is implemented.
